(19) Europäisches Patentamt
European Patent Office
Office européen des brevets

(11) **EP 3 232 711 B1**

(12) **EUROPEAN PATENT SPECIFICATION**

(45) Date of publication and mention
of the grant of the patent:
**26.06.2019 Bulletin 2019/26**

(51) Int Cl.:
***H04W 28/18*** (2009.01)     ***H04W 4/06*** (2009.01)

(21) Application number: **15867157.8**

(86) International application number:
**PCT/JP2015/084144**

(22) Date of filing: **04.12.2015**

(87) International publication number:
**WO 2016/093166 (16.06.2016 Gazette 2016/24)**

(54) **RADIO RESOURCE CONTROL SYSTEM, RADIO BASE STATION, RELAY DEVICE, RADIO RESOURCE CONTROL METHOD, AND PROGRAM**

FUNKRESSOURCENSTEUERUNGSSYSTEM, FUNKBASISSTATION, RELAISVORRICHTUNG, VERFAHREN ZUR STEUERUNG VON FUNKRESSOURCEN UND PROGRAMM

SYSTÈME DE COMMANDE DE RESSOURCE RADIO, STATION DE BASE RADIO, DISPOSITIF RELAIS, PROCÉDÉ DE COMMANDE DE RESSOURCE RADIO, ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2014 JP 2014247975**

(43) Date of publication of application:
**18.10.2017 Bulletin 2017/42**

(73) Proprietor: **NEC Corporation**
**Tokyo 108-8001 (JP)**

(72) Inventors:
• **KOBAYASHI, Kosei**
**Tokyo 108-8001 (JP)**
• **NOBUKIYO, Takahiro**
**Tokyo 108-8001 (JP)**
• **FUTAKI, Hisashi**
**Tokyo 108-8001 (JP)**

(74) Representative: **MacDougall, Alan John Shaw et al**
**Mathys & Squire LLP**
**The Shard**
**32 London Bridge Street**
**London SE1 9SG (GB)**

(56) References cited:
**WO-A1-2012/081150     WO-A1-2013/123467**
**WO-A1-2013/123467     JP-A- 2012 191 440**
**US-A1- 2013 089 033**

**Description**

[Technical Field]

[Cross-Reference to Related Application]

This application claims the benefit of Japanese Patent Application No. 2014-247975 (filed December 8, 2014).

This invention relates to a wireless resource control system, a wireless base station, a relay apparatus, a wireless resource control method, and program.

[Background]

Widespread use of smartphones and tablet terminals has been rapidly increasing a traffic amount of wireless commutation, as a result of which spread of LTE (Long Term Evolution) communication realizing high speed and large capacity and introducing LTE-Advanced (LTE-A) supporting further high speed are now in progress. A mobile network of LTE/LTE-A includes a mobile access network (eUTRAN (Evolved Universal Terrestrial Radio Access Network)) and a mobile core network (EPC (Evolved Packet Core)).

EUTRAN includes a wireless base station (eNB (evolved Node B)) and a wireless terminal (UE (User Equipment)).

EPC includes a P-GW (PDN (Packet Data Network) Gateway) for connecting to an external network such as the Internet, and an S-GW (Serving Gateway) handling U-plane (User plane) of user data.

A mobile network of LTE/LTE-A uses a packet switching system that can flexibly allocate bandwidth, from a viewpoint of improvement of frequency utilization efficiency and so forth. In LTE/LTE-A, a voice communication is also packetized as VoIP (Voice over IP (Internet Protocol).

A packet sent from a content transmission apparatus that provides various communication services for a wireless terminal, arrives generally via the Internet at a mobile core network, which transmits the packet to the wireless terminal via a mobile access network. As an example of the content transmission apparatus, for example, at least one of World Wide Web (WWW) server, FTP (File Transfer Protocol) server, Mail server, File server, Data base server, Application server, Streaming server, DNS (Domain Name System) server and so forth is included. As the content transmission apparatus for one wireless terminal, another wireless terminal other than the one wireless terminal may be included.

A mechanism that controls QoS (Quality of Service) of a network is called as QoS control. In LTE, QCI (QoS Class Identifier) is defined in nine steps for respective service types, as a parameter managing QoS. For example, a presence of guaranteed bandwidth (GBR (Guaranteed Bit Rate: guaranteed bandwidth) or Non-GBR (non guaranteed bandwidth)), priority, allowable delay time (PDB (Packet Delay Budget)), packet loss rate and so forth can be defined by QCI. In LTE, a S-GW, P-GW and wireless base station (eNodeB) perform QoS control according to a QCI value notified from PCRF (Policy and Charging Rules Function that performs determination of a QCI value for bearer, policy of transmission or discarding of a packet, and accounting control).

In LTE mobile network, a bearer is set for each wireless terminal and for each QCI. More specifically, a radio access bearer (e-RAB (E-UTRAN Radio Access Bearer)) and a S5/S8 bearer are included in EPS (Evolved Packet System) bearer that is set in the LTE mobile network. Here, the radio access bearer (e-RAB) includes a wireless bearer that is set between a wireless terminal (UE) and a wireless base station (eNodeB), and a S1 bearer set between the wireless base station (eNodeB) and S-GW. Also, S5/S8 bearer is set between P-GW and S-GW and has GTP (GPRS (General Packet Radio Service) Tunneling Protocol) tunnel, for example.

A scheduler of a wireless base station controls allocation of wireless resource for each wireless terminal or each bearer in consideration of QCI for each bearer (non-Patent Literature 1). More specifically, the scheduler of the wireless base station determines when and what amount of wireless resource is allocated to which wireless terminal or which bearer. The wireless resource may include, for example, frequency resource, time resource, physical resource block, transmission power, component carrier, and so forth.

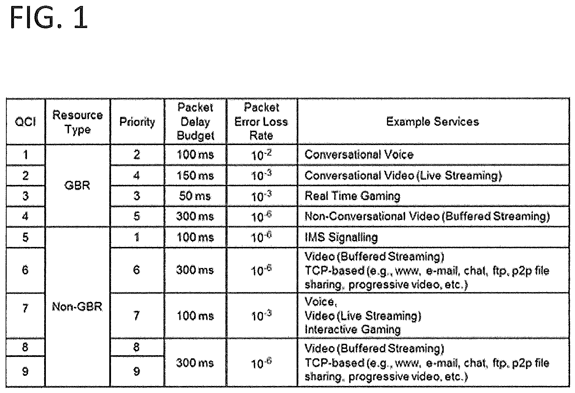

In FIG. 1, a table defining QCI in LTE is shown (reference may be made to "Table 6.1.7: Standardized QCI characteristics" in Non- Patent Literature 1). Referring to FIG. 1, there are illustrated service types, such as QCI=1 that is Conversation Voice, QCI=8 that is Video and TCP (Transmission Control Protocol-based. For example, when a first wireless terminal is waiting for a reception of a packet of QCI=1 and a second wireless terminal is waiting for a reception of a packet of QCI=8 that is of low priority, a wireless base station can transmit a packet at first to the first wireless terminal, in consideration of QCI, because the first wireless terminal is waiting a packet with a high priority.

According to a method disclosed in Patent Literature 1, a wireless base station identifies a traffic type of a packet that has arrived thereto from a mobile core network and sets an allowable delay time and a target transmission rate according to the traffic type identified. The wireless base station controls allocation of wireless resource for each packet so as to meet an allowable delay amount and a target transmission rate. For example, when a transmission rate of a specific communication measured by the wireless base station does not reach the target transmission rate prescribed by the traffic type of the communication, allocation priority of wireless resource for the communication is increased.

Patent Literature 2 discloses an arrangement that enables to dynamically change an amount of wireless resource allocated to each of a plurality of mobile communication systems with different communication schemes. In Patent Literature 2, there is description that there is no need for a significant remodeling of an application in a base station control apparatus of an existing system and in a base station apparatus of a new system on a network side. Patent Literature 3 discloses an arrangement in which a communication type information acquisition unit is provided in a wireless base station. The communication type information acquisition unit acquires communication type information by recognizing a type of communication with each wireless terminal, and provides the communication type information to a control unit of the wireless base station. The communication type information acquisition unit classifies the communication type information into one communication type (T1) in which, for example, real time property such as a voice communication or streaming is required, and the other communication type (T2) in which a data communication such as browsing is performed, and supplies the classified communication type to the control unit of the wireless base station. The control unit of the wireless base station controls allocation of wireless resource blocks for a plurality of the wireless terminals, at each predetermined time, based on propagation loss measured by a propagation loss measurement unit, difference information acquired by a difference information acquisition unit, and communication type information acquired by the communication type information acquisition unit and a moving speed acquisition unit of the wireless base station, and transmits the result to a corresponding wireless terminal via a wireless communication unit of the wireless base station.

According to a method disclosed in Non-Patent Literature 2, a server acquires information on a user experience quality (QoE (Quality of Experience)) and a network controller controls an access point (AP) of Wi-Fi (Wireless Fidelity: a registered trademark of Wi-Fi Alliance) by using the information on QoE acquired.

In the following description, a quality of service (QoS), such as packet delay or packet loss rate and a user experience quality (QoE) indicating a quality experienced by a user are collectively referred to simply as "communication quality".

[Patent Literature 1]
Japanese Patent No. 4335619
[Patent Literature 2]
Japanese Patent Kokai Publication No. JP-2012-005059A
[Patent Literature 3]
Japanese Patent Kokai Publication No. JP-2011-097286A

[Non-Patent Literature 1]
3GPP(Third Generation Partnership Project) TS23.203 v11.13.0(2014-03), Policy and charging control architecture, p.38
[Non-Patent Literature 2]

Aruba NETWROKS Inc., SOLUTION GUIDE DEPLOYING ARUBA WIRELESS CONTROLLERS WITH MICROSOFT LYNC SDN API, pp. 4-5, [September 25. 2014], Internet <URL : http://www.arubanetworks.com/assets/tg/SG_DeployMicrosoftLync.pdf>

WO 2013/123467 discloses methods, apparatuses and systems for performing hierarchical traffic differentiation and/or employing hierarchical traffic differentiation. These methods, apparatuses and systems may be implemented to, for example, handle congestion and/or to manage user quality of experience (QoE). Performing the hierarchical traffic differentiation may include differentiating or otherwise classifying (collectively "differentiating") traffic mapped to, or within, a bearer formed in accordance with a QoS class into multiple traffic sub-classes. Employing the hierarchical traffic differentiation may include scheduling and/or policing (e.g., filtering) the differentiated traffic for transmission based on a prioritization of, and/or policy for managing, the multiple traffic sub-classes.

[Summary of Invention]

The following describes an analysis of the related technologies.

There is a gap between a communication quality of a mobile access network between a wireless base station and a wireless terminal, and a communication quality between a content transmission apparatus and a wireless terminal (that is, an end-to-end). That is, a packet flowing between the content transmission apparatus and the wireless terminal generally goes through a plurality of networks. Thus, a degradation of a communication quality in some networks influences a user experience quality at the wireless terminal. Therefore, a mere evaluation of a communication quality of a limited section between a wireless base station and a wireless terminal cannot provide a correct evaluation of an end-to-end communication quality.

For this reason, there is a possibility that an end-to-end required quality may not be met in a scheme of evaluating a communication quality between a wireless base station and a wireless terminal (e.g., Patent Literature 1), even if allocation of wireless resource is controlled by evaluating a communication quality based on a criteria according to a traffic type or a QCI.

As a method for controlling allocation of wireless resource based on an end-to end communication quality, there is a method that acquires the end-to end communication quality from a wireless terminal or a content transmission apparatus (e.g., Non-Patent Literature 2).

However, when acquiring nonstandard information by the above method, software or hardware remodeling is required in a wireless terminal and a content transmission apparatus. Therefore, an introduction cost is high.

Further, when information is acquired from a wireless terminal, as in a case of Non-Patent Literature 2, there are is a concern about an increase in signaling load of a wireless section and also a concern about an increase in battery consumption of a wireless terminal.

Therefore, the present invention has been invented in consideration of the above problems. The present invention provides a system, method, apparatus and program as set out in the appended claims.

In a first example, there is provided a wireless resource control system comprising: a content transmission apparatus; a wireless terminal; a wireless base station that receives data transmitted from the content transmission apparatus and transmits the data wirelessly to the wireless terminal; and a relay apparatus arranged on a communication path between the content transmission apparatus and the wireless base station, wherein the relay apparatus includes: a communication quality evaluation unit that evaluates a communication quality relating to communication between the content transmission apparatus and the wireless terminal; and a control information generation unit that generates control information for controlling allocation of wireless resource for the wireless terminal, based on the communication quality, and wherein the wireless base station comprises: a wireless resource control unit that controls allocation of wireless resource for the wireless terminal, based on the control information.

In another example, there is provided a relay apparatus arranged on a communication path between a content transmission apparatus that transmits a content via a wireless base station to a wireless terminal and the wireless base station, the relay apparatus comprising: a communication quality evaluation unit that evaluates a communication quality relating to communication between the content transmission apparatus and the wireless terminal; a control information generation unit that generates control information for controlling allocation of wireless resource of the wireless base station for the wireless terminal, based on the communication quality; and a communication unit that notifies the control information to the wireless base station.

In still another example, there is provided a wireless base station that transmits wirelessly data transmitted from a content transmission apparatus to a wireless terminal, the wireless base station comprising: a wireless resource control unit that receives control information, based on an evaluation result of a communication quality relating to communication between the content transmission apparatus and a wireless terminal, from a relay apparatus arranged on the communication path between the content transmission apparatus and the wireless base station, and that controls allocation of wireless resource for the wireless terminal based on the control information.

In further example, there is provided a wireless resource control method comprising:

evaluating, by a relay apparatus, a communication quality relating to communication between a content transmission apparatus and a wireless terminal, the relay apparatus being arranged on a communication path between a wireless base station and the content transmission apparatus that transmits a content via the wireless base station to the wireless terminal; and

generating, by the relay apparatus, control information for controlling allocation of wireless resource for the wireless terminal, based on the communication quality to notify the control information to the wireless base station; and

controlling, by the wireless base station, allocation of wireless resource for the wireless terminal, based on the control information.

In a yet further example, there is provided a program that causes a computer constituting a relay apparatus arranged on a communication path between a wireless base station and a content transmission apparatus that transmits a content via the wireless base station to a wireless terminal to execute processing comprising:

evaluating a communication quality relating to communication between the content transmission apparatus and the wireless terminal; and

generating control information for controlling allocation of wireless resource of the wireless base station for the wireless terminal.

In yet another example, there is provided a program that causes a computer constituting a wireless base station to execute processing comprising:

receiving control information based on an evaluation result of a communication quality relating to communication between a wireless terminal and a content transmission apparatus that transmits a content via the wireless base station to the wireless terminal; and

controlling allocation of wireless resource for the wireless terminal, based on the control information.

In still another example, there is provided a computer-readable recording medium (non-transitory computer-readable recording medium: semiconductor memory, magnetic/optical storage medium, and so forth) which stores therein the program according to each of the above described aspects.

According to the present invention, it is possible to realize wireless resource control for a wireless terminal so as to meet a required communication quality on an end-to-end basis.

[Brief Description of Drawings]

FIG. 1 is a diagram schematically illustrating a specification list of QCI in LTE in a tabular form.

FIG. 2 is a diagram illustrating a system arrangement common to embodiments of the present invention.

FIG. 3 is a diagram illustrating an arrangement of a wireless base station and a relay apparatus in a first embodiment of the present invention.

FIG. 4 is a diagram illustrating an arrangement of a wireless base station and a relay apparatus in a second embodiment of the present invention.

FIG. 5 is a flow chart illustrating an operation of the second embodiment of the present invention.

FIG. 6 is a diagram illustrating an arrangement of a wireless base station and a relay apparatus in a third embodiment of the present invention.

FIG. 7 is a flow chart illustrating an operation of the third embodiment of the present invention.

FIG. 8 is a diagram illustrating an arrangement of a wireless base station and a relay apparatus in a fourth embodiment of the present invention.

FIG. 9 is a flow chart illustrating an operation of the fourth embodiment of the present invention.

[Description of Embodiments]

Example embodiments of the present invention will be described in detail with referring to drawings. In each of drawings, the same reference numerals are used to indicate the same or corresponding elements, and an overlapped description will be omitted as appropriate.

<Example Embodiment>

(Description for a system arrangement)

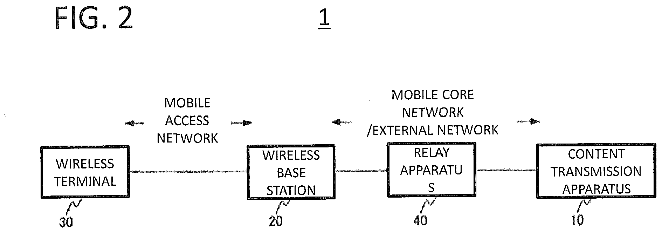

FIG. 2 is a diagram schematically illustrating an arrangement example of a wireless resource control system 1 common to each of example embodiments of the present invention. Referring to FIG. 2, the wireless resource control system 1 includes a content transmission apparatus 10, a wireless base station 20, a wireless terminal 30 and a relay apparatus 40.

The content transmission apparatus 10 provides various communication services to the wireless terminal 30. The content transmission apparatus 10 may be a WWW (World Wide Web) server, a FTP (File Transfer Protocol) server, a mail server, a file server, a data base server, an application server, a streaming server, a DNS (Domain Name System) server or the like. Also, when the wireless terminal 30 sends contents to other wireless terminal (not shown), the wireless terminal 30 itself can be a content transmission apparatus for the other wireless communication.

The wireless base station 20 forms a wireless cell (not shown) that is a region (area) in which wireless communication with the wireless base station 20 is possible. The wireless base station 20 executes bidirectional wireless communication with the wireless terminal 30 that connects to the wireless cell managed by the wireless base station 20. For example, one to about six wireless cells is managed by one wireless base station 20. The wireless base station 20 is configured to relay a traffic between a mobile core network and a mobile access network. It is noted that the wireless base station 20 may be any one of a macro wireless base station covering a wide area, a micro wireless base station and a pico wireless base station that cover relative a narrow area, a femto wireless base station which is a small wireless station for indoor use, and a relay base station relaying a wireless signal.

The wireless terminal 30 is a terminal equipped with a function of performing a wireless connection to a mobile network. The wireless terminal 30 can be any one of a feature-phone, a smartphone, a tablet terminal, a laptop computer, one of various types of sensing devices and machine type communication (MTC) device. Also, a wireless system that can be used by the wireless terminal 30 is not always limited to one. The wireless terminal 30 may support a plurality of wireless systems. For example, the wireless terminal 30 may support a plurality of wireless systems out of (RAT (Radio Access Technology)) including LTE, LTE-Advanced, UMTS (Universal Mobile Telecommunications System), GSM (Global System for Mobile communications: GSM is a registered trademark of GSM MOU Association), Wi-Fi (Wireless Fidelity : Wi-Fi is a registered trademark of Wi-Fi Alliance), Local Area Network, WiMAX (Worldwide Interoperability for Microwave Access), CDMA (Code Division Multiple Access) 2000 (CDMA2000 is a registered trademark of TIA (Telecommunications Industry Association)), HSPA (High Speed Packet Access) and so forth.

The relay apparatus 40 is arranged on a communication path between the content transmission apparatus 10 and the wireless base station 20. The relay apparatus 40 is equipped with a function of relaying a traffic between the content transmission apparatus 10 and the wireless base station 20. The relay apparatus 40 can be arranged in either a mobile core network or an external network (e.g., the Internet).

When the relay apparatus 40 is arranged in a mobile core network, the relay apparatus 40 may be functionally arranged as a part of the other apparatus in the mobile core network, or the relay apparatus 40 may be arranged as an independent apparatus (stand-alone unit). When, for example, the relay apparatus 40 is arranged in the mobile core network of LTE, P-SW or S-GW may function as the relay apparatus 40 (namely, the function of the relay apparatus 40 may be implemented in P-GW or S-GW.) As another example, when a traffic control apparatus controlling a traffic flow rate is arranged in the mobile core network, the traffic control apparatus can be the relay apparatus 40.

It is noted that the relay apparatus 40 and the wireless base station 20 may not need to be connected directly. The relay apparatus 40 may be connected to the wireless base station 20, via other relay apparatus(es) or other network(s) (not shown).

Similarly, the relay apparatus 40 and the content transmission apparatus 10 may not necessarily be connected directly. The relay apparatus 40 may be connected to the content transmission apparatus 10 via other relay apparatus(es) or other network(s) (not shown).

The relay apparatus 40 evaluates a communication quality relating to communication between the content transmission apparatus 10 and the wireless terminal 30, generates control information for controlling allocation of wireless resource for the wireless terminal 30 and notifies the generated control information to the wireless base station 20.

<First Example Embodiment>

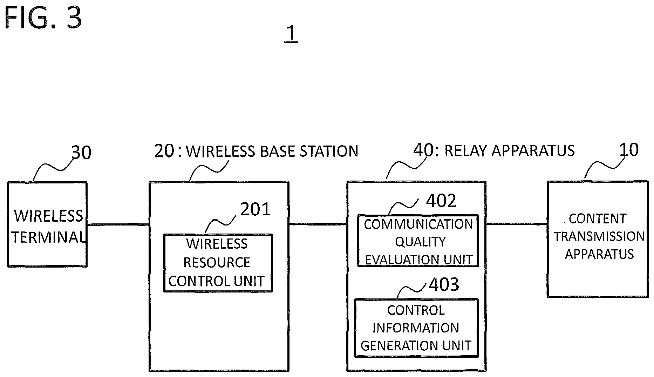

FIG. 3 is a diagram schematically illustrating an example of each arrangement of the wireless base station 20 and the relay apparatus 40 relating to the wireless resource control system 1 described with reference to FIG. 2. It is noted that since existing apparatuses may be used as they are, as the content transmission apparatus 10 and the wireless terminal 30, both of which are also well-known to those skilled in the art, diagrams illustrating detailed arrangements thereof and relevant description will be omitted.

Referring to FIG. 3, the wireless resource control system 1 includes a content transmission apparatus 10, a wireless base station 20 that receives data (packet) transmitted from the content transmission apparatus 10 and transmits the data wirelessly to a wireless terminal 30, and a relay apparatus 40 arranged on a communication path between the content transmission apparatus 10 and the wireless base station 30. The relay apparatus 40 includes a communication quality evaluation unit 402 that evaluates a communication quality relating to communication between the content transmission apparatus 10 and the wireless terminal 30, and a control information generation unit 403 that generates control information for controlling allocation of wireless resource for the wireless terminal 30 based on the communication quality. The wireless base station 20 includes a wireless resource control unit 201 that controls allocation of wireless resource for the wireless terminal 30, based on the control information transmitted from the relay apparatus 40.

In the relay apparatus 40, the communication quality evaluation unit 402 may evaluate a communication quality relating to communication between the content transmission apparatus 10 and the wireless terminal 30, by using at least one of a first communication quality between the relay apparatus 40 and the wireless terminal 30 and a second communication quality between the content transmission apparatus 10 and the relay apparatus 40. Alternatively, the communication quality evaluation unit 402 may evaluate the communication quality relating to communication between the content transmission apparatus 10 and the wireless terminal 30 by calculating a third communication quality between the content transmission apparatus 10 and the wireless terminal 30, by using both of the first and second communication qualities. As described above, the communication quality evaluation unit 402 preferably evaluates a communication quality of a communication path including at least a part of a communication path between the wireless base station 20 and the content transmission apparatus 10.

The following describes an example of a wireless resource control method (procedure) in the wireless resource control system 1 of the present embodiment as illustrated in FIG. 3.

In the relay apparatus 40, the communication quality evaluation unit 402 evaluates a communication quality relating to communication between the content transmission apparatus 10 and the wireless terminals 30 and generates control information for controlling allocation of wireless resource for the wireless terminal 30, based on the communication quality.

In the wireless base station 20, the wireless resource control unit 201 controls allocation of wireless resource, based on the control information generated in the relay apparatus 40. It is noted that the wireless resource may be, for example, at least any one of frequency resource, time resource, physical resource block, transmission power, component carrier, and so forth, in a mobile access network section (wireless section).

It is noted that the number of the wireless terminal 30 connected to the wireless base station 20 is not limited to one. The number of the wireless terminals 30 may be, as a matter of course, two or more. In this case, the wireless resource control unit 201 may control when and what amount of wireless resource is allocated to which one of a plurality of wireless terminals 30. For example, the wireless resource control unit 201 may prioritize allocation of wireless resource for a specific wireless terminal 30 based on the control information notified from the relay apparatus 40. Or, the wireless resource control unit 201 may prioritize allocation of wireless resource for a specific bearer, in a case where the wireless terminal 30 establishes a plurality of bearers.

In FIG. 3, the wireless resource control unit 201 of the wireless base station 20 may execute at least a part of function and processing thereof by a program (stored in a memory and so forth not shown) executed by a controller or processor (CPU (Central Processing Unit)) not shown that is mounted in the wireless base station 20. Similarly, the communication quality evaluation unit 402 and the control information generation unit 403 of the relay apparatus 40 may execute a part of function and processing thereof by a program (stored in a memory and so forth not shown) executed by a controller or processor (CPU) not shown that is mounted in the relay apparatus 40. The same may be applied to respective units of the relay apparatus 40 and the wireless base station 20 in second to fourth embodiments below described.

According to the present embodiment, allocation of wireless resource for the wireless terminal 30 is controlled based on evaluation result of a communication quality relating to communication between the content transmission apparatus 10 and the wireless terminal 30, thereby enabling to realize wireless resource control for the wireless terminal 30 so as to meet a required communication quality between the content transmission apparatus 10 and the wireless terminal 30.

<Second Example Embodiment>

Next, regarding the wireless resource control system 1 illustrated in FIG. 2, another example of an arrangement of the wireless base station 20 and the relay apparatus 40 will be further described. It is noted that since existing apparatuses may be used, as they are, as the content transmission apparatus 10 and the wireless terminal 30, both of which are also well-known to those skilled in the art, drawings illustrating detailed arrangements thereof and relevant description will be omitted.

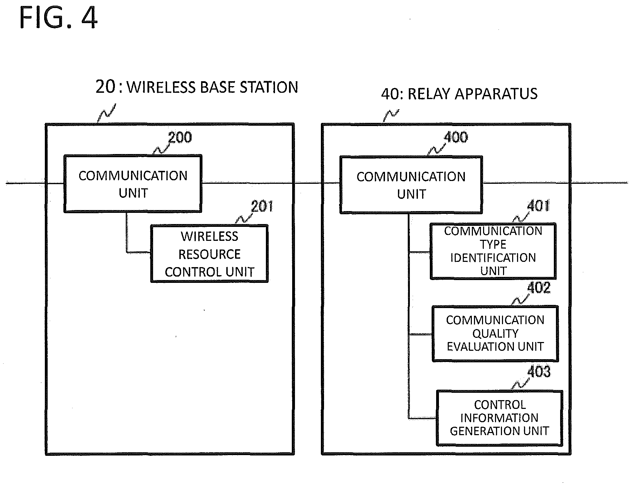

FIG. 4 is a diagram illustrating an example of an arrangement of the wireless base station 20 and the relay apparatus. Referring to FIG. 4, the wireless base station 20 includes a communication unit 200 and a wireless resource control unit 201.

In the wireless base station 20, the communication unit 200 provides a basic function of the wireless base station 20. For example, the communication unit 200 has such functions as to relay traffic between a mobile core network and a mobile access network, and to transmit and receive wireless signals between the wireless terminal 30 and the wireless base station 20. It is noted that since the function equipped in the communication unit 200 of the wireless base station 20 is well-known to those skilled in the art, detailed description thereof will be omitted.

The wireless resource control unit 201 of the wireless base station 20 controls allocation of wireless resource for the wireless terminal 30, by using control information notified from the relay apparatus 40. The wireless resource may include, for example, at least any one of:

- frequency resource;
- time resource;
- physical resource block;
- transmission power;
- component carrier, and so forth,

in a mobile access network section (wireless section).

It is noted that the number of wireless terminal 30 connected to the wireless base station 20 is not limited to one. The number of the wireless terminals 30, as a matter of course, may be more than one. In this case, the wireless resource control unit 201 may control when and what amount of wireless resource is to be allocated to which one of a plurality of wireless terminals 30. For example, the wireless resource control unit 201 may prioritize allocation of wireless resource for a specific wireless terminal 30, based on the control information notified from the relay apparatus 40. Or, the wireless resource control unit 201 may prioritize allocation of wireless resource for a specific bearer, in a case where the wireless terminal 30 establishes a plurality of bearers.

The relay apparatus 40 includes a communication unit 400, a communication type identification unit 401, a communication quality evaluation unit 402 and a control information generation unit 403.

The communication unit 200 has a function to control a traffic between the content transmission apparatus 10 and the wireless base station 20.

It is noted that the relay apparatus 40 and the content transmission apparatus 10 may need not to be directly connected and the relay apparatus 40 and the wireless base station 20 may need not to be direct connection, but other relay apparatus(es) or other network(s) may be provided therebetween. When P-GW or S-GW that is a component of a mobile core network of LTE, a traffic control apparatus, or the like, is used as the relay apparatus 40, the communication unit 400 of the relay apparatus 400 has functions provided by these apparatuses.

The communication type identification unit 401 of the relay apparatus 40 monitors communication between the content transmission apparatus 10 and the wireless terminal 30 to identify a communication type. More specifically, the communication type identification unit 401 is configured to be able to identify a communication type by analyzing a packet, for example, by using DPI (Deep Packet Inspection) function or the like.

Here, DPI refers to a function to read (inspect) a payload (data portion) of a packet to acquire information on a higher layer (e.g., a TCP header of a layer higher than the IP layer is arranged in a payload portion of the IP packet).

It is noted that "identification of a communication type" includes also acquiring a communication type identified by an apparatus other than the relay apparatus 40 via a communication line. The communication type identification unit 401 may be arranged in the wireless base station 20.

It is noted that the communication type includes, for example, at least any one of following information items:

- application type (e.g., voice call, video call, voice streaming, video streaming, e-mail, SMS (Short Message Service), MMS (Multimedia Messaging Service), chat, WEB browsing, FTP, game, and so forth);
- application name;
- protocol (e.g., protocol of session layer (e.g., HTTP (Hypertext Transfer Protocol), FTP, SMTP (Simple Mail Transfer Protocol), SIP (Session Initiation Protocol), H.323 and so forth), and protocol of transport layer (e.g., TCP, UDP (User Datagram Protocol), SSL (Secure Sockets Layer), IPSec (Security Architecture for Internet Protocol) and so forth);

- IP (Internet Protocol) address or port number of the content transmission apparatus 10 and/or the wireless terminal 30; and
- QCI assigned in the mobile core network.

The communication quality evaluation unit 402 of the relay apparatus 40 evaluates a communication quality relating to communication between the content transmission apparatus 10 and the wireless terminal 30. The communication quality evaluated by the communication quality evaluation unit 402 may be a communication quality between the relay apparatus 40 and the wireless terminal 30 (a first communication quality).

The communication quality evaluated by the communication quality evaluation unit 402 may be a communication quality between the content transmission apparatus 10 and the relay apparatus 40 (a second communication quality). Alternatively, such a communication quality that is evaluated for a communication path including at least a part of "a communication path of a section excluding a mobile access network section (wireless section) between the wireless base station 20 and the wireless terminal 30 (i.e., the communication path between the wireless base station 20 and the content transmission apparatus 10) out of a communication path on an end-to-end basis that connects the content transmission apparatus 10 and the wireless terminal 30, may be used as a communication quality relating to communication between the content transmission apparatus 10 and the wireless terminal 30.

The communication quality evaluation unit 402 may well compute a communication quality between the content transmission apparatus 10 and the wireless terminal 30 (the communication quality on an end-to-end basis) by using a communication quality between the relay apparatus 40 and the wireless terminal 30 and a communication quality between the content transmission apparatus 10 and the wireless terminal 30.

The communication quality index may include, for example, at least one of the following items:

- packet delay (One Way Delay or RTT (Round Trip Time));
- packet delay variation;
- packet loss rate (or the number of packet losses);
- packet error rate (or the number of packet errors);
- packet order reversal rate (or the number of occurrences of packet order reversal);
- packet transfer rate;
- packet retransmission rate (or the number of occurrences of packet retransmission); and so forth.

A new communication quality index may be also defined by arbitrarily combining the above indices.
The communication quality evaluation unit 402 may evaluate a communication quality by using such means as DPI (Deep Packet Inspection).

Or, the communication quality evaluation unit 402 may be equipped with a function to terminate a protocol that is terminated on an end-to-end basis (e.g., TCP Protocol) at the relay apparatus 40, in order to evaluate a communication quality relating to communication between the content transmission apparatus 10 and the wireless terminal 30.
When, for example, a packet transmitted from the content transmission apparatus 10 arrives at the relay apparatus 40, from which the packet is relayed to the wireless base station 20, the communication quality evaluation unit 402 of the relay apparatus 40, by using DPI, identifies and records in a storage, information (called "downlink forwarding information"), such as

- IP address (IP header) of a source (content transmission apparatus 10);
- port number (e.g., TCP header) of a source (content transmission apparatus 10);
- IP address (IP header) of a destination (wireless terminal 30);
- port number (e.g., TCP header) of a destination (wireless terminal 30);
- sequence number of the packet (e.g., TCP header);
- arrival time of the packet at the relay apparatus 40; and so forth.

It is also called Stateful Packet Inspection(SPI) that an IP network equipment checks (not deep but shallow inspection) a header of TCP or UDP (User Datagram Protocol) that is an upper layer of IP layer (SPI monitors a situation of communication in a network and checks, whether the communication is performed properly). It is noted that TCP packet is included in a payload of IP packet, TCP header following IP header (20 bytes without any options) has 20 bytes + Options (Multiple of 4 bytes). UDP header (Source Port, Destination Port Number, UDP Packet length, and Check Sum) included in a payload of IP Packet is of 8 bytes.
Further, when a response packet (e.g., Acknowledgement packet ACK or Negative Acknowledgement NACK, which is not used in TCP) from the wireless terminal 30 for a packet transmitted to the wireless terminal 30 arrives at the relay apparatus 40 and is relayed to the content transmission apparatus 10, the communication quality evaluation unit 402 of the relay apparatus 40, using DPI, identifies and records, in a storage, information of the response packet (called "downlink forwarding information"), including such items as

- IP address of a source (wireless terminal 30);
- port number of a source (wireless terminal 30);
- IP address (IP header) of a destination (content transmission apparatus 10);
- port number of a destination (content transmission apparatus 10);
- arrival time of the packet at the relay apparatus 40;
- sequence number of a packet that the wireless terminal 30 next requires; and so forth.

The following describes an evaluation example of a packet delay as an evaluation example of a communication quality.

In the relay deice 40, the communication evaluation unit 402 is configured to be able to evaluate a round trip delay time (RTT) of a packet between the relay apparatus 40 and the wireless terminal 30 by associating downlink forwarding information with uplink forwarding information and analyzing time difference between a packet arrival time from the wireless terminal 30 to the relay apparatus 40 and a packet arrival time from the content transmission apparatus 10 to the relay apparatus 40. A one way delay time of a packet may be determined, for example, by dividing a round trip delay time (RTT) by 2.

Alternatively, the communication quality evaluation unit 402 may determine "one way delay from the relay apparatus 40 to the wireless terminal 30" and determine "one way delay from the wireless terminal 30 to the relay apparatus 40", by using a ratio of "a packet transfer rate from the relay apparatus 40 to the wireless terminal 30" to "a packet transfer rate from the wireless terminal 30 to the relay apparatus 40".

The following describes a case wherein it has been derived, based on measurement values (or it is known empirically) that "the packet transfer rate from the relay apparatus 40 to the wireless terminal 30" is, for example, twice "the packet transfer rate from the wireless terminal 30 to the relay apparatus 40".

In this case, assuming that a round trip delay time (RTT) of a packet between the relay apparatus 40 and the wireless terminal 30 is 300 ms (millisecond), the communication quality evaluation unit 402 can derive, by dividing the RTT at a ratio of 1:2, that
"the one way delay from the relay apparatus 40 to the wireless terminal 30" is 100 ms, and
"the one way delay from the wireless terminal 30 to the relay apparatus 40" is 200 ms.

Next describes an evaluation example about a packet retransmission rate, as another evaluation example of a communication quality.

The communication evaluation unit 402 of the relay apparatus 40 is able to evaluate, using the downlink forwarding information, the packet retransmission rate from the relay apparatus 40 to the wireless terminal 30, by analyzing the number of transmission times of a packet with a TCP header having an identical sequence number (a predetermined value is added every time when a packet is received), out of packets which have the same

- IP address of a source (content transmission apparatus 10);
- port number of a source (content transmission apparatus 10);
- IP address of a destination (wireless terminal 30);

and
- port number of a destination (wireless terminal 30).

Next describes an evaluation example of a packet transfer rate, as a further evaluation example of a communication quality.

The communication quality evaluation unit 40 of the relay apparatus 40 is able to evaluate, using downlink forwarding information, a packet transfer rate from the relay apparatus 40 to the wireless terminal 30 by analyzing the number of packet transmission times per unit time for packets which have the same:

- IP address of a source (content transmission apparatus 10);
- port number of a source (content transmission apparatus 10);
- IP address of a destination (wireless terminal 30); and
- port number of a destination (wireless terminal 30).

As an evaluation example of a further communication quality, next describes an evaluation example of a packet loss rate and a packet order reversal rate.

In TCP protocol, an occurrence of a packet loss and a reversal of a packet arrival order may be detected by using a sequence number (a predetermined value is added every time when a packet is received) in a TCP header. An occurrence of a packet loss and a reversal of a packet arrival order may be detected by using a sequence number (a predetermined value is added every time when a packet is received) of a header of RTP (Real-time Transport Protocol) protocol (a payload of a UDP (User Datagram Protocol) packet). The packet loss rate is a frequency of occurrence of a packet loss on a communication path. The packet order reversal rate is a frequency of occurrence of a reversal in a packet arrival order

It is noted that the relay apparatus 40 may be equipped with no DPI function in order to obtain information on a further higher layer, when the relay apparatus 40 has in advance a function sufficient to identify a communication type and to evaluate a communication quality.

For example, P-GW has a function to terminate a protocol of IP layer and can read a IP header. In the IP header, there is an 8 bit protocol number field to store a number indicating a protocol type of a transport layer that is a higher layer of the IP protocol. Therefore, P-GW can identify a communication type from information of the protocol number field in the IP header, when, for example, the relay apparatus 40 is P-GW and "protocol" is adopted as an information item to decide a communication type. Furthermore, the relay apparatus 40 constructed as P-GW can evaluate a communication quality from an IP address (source IP address and destination IP address) and so forth of the IP header, by a method similar to that described above.

In the above examples, there are illustrated evaluation examples in which the communication quality evaluation unit 402 evaluates a communication quality between the relay apparatus 40 and the wireless terminal 30. However, the present embodiment is, as a matter of course, not limited to the above described example.

For example, the relay apparatus 40 can evaluate a communication quality between the content transmission apparatus 10 and the relay apparatus 40, by using a method similar to that described above, wherein the relay apparatus 40 regards information obtained when the relay apparatus 40, using a packet transmitted from the wireless terminal 30 to the content transmission apparatus 10, relays the packet to the content transmission apparatus 10, as downlink forwarding information, and regards information obtained when the relay device 40 receives a response packet for the relevant packet from the content transmission device 10 and relays the response packet to the radio base station 20, as uplink forwarding information.

In the above example, such a method is described as that in which a communication quality between the relay apparatus 40 and the wireless terminal 30, and a communication quality between the content transmission apparatus 10 and the relay apparatus 40 are evaluated by analyzing (utilizing) a packet flowing between the content transmission apparatus 10 and the wireless terminal 30. However, the embodiment is not limited to such a method. For example, a dedicated packet may be transmitted from the relay apparatus 40 to the wireless terminal 30 in order to evaluate a communication quality between the relay apparatus 40 and the wireless terminal 30.

A dedicated packet may also be transmitted from the relay apparatus 40 to the content transmission apparatus 10 in order to evaluate a communication quality between the content transmission apparatus 10 and the relay apparatus 40.

When evaluating a communication quality between the content transmission apparatus 10 and the wireless terminal 30 (communication quality on an end-to-end basis), by the above described method, the communication quality evaluation unit 402 of the relay apparatus 40 may respectively evaluate:

- a communication quality between the relay apparatus 40 and the wireless terminal 30, and
- a communication quality between the content transmission apparatus 10 and the relay apparatus 40,

and may integrate the communication qualities, each of which is evaluated for each of sections.

For example, in the case of the communication quality being a packet delay, the communication quality evaluation unit 403 of the relay apparatus 40 may calculate a sum of packet delays evaluated in respective sections.

For example, in the case of the communication quality being a transfer rate, the communication quality evaluation unit 403 of the relay apparatus 40 may derive a smaller value out of packet transfer rates evaluated in respective sections.

Also, the communication quality evaluation unit 403 of the relay apparatus 40 may evaluate only one of a communication quality between the relay apparatus 40 and the wireless terminal 30 and a communication quality between the content transmission apparatus 10 and the relay apparatus 40, with the assumption that another communication quality that has not been evaluated takes a fix value.

In this case, the communication evaluation unit 402 can evaluate a communication quality between the content transmission apparatus 10 and the wireless terminal 30 (a communication quality on an end-to-end basis), by using both of "an evaluated communication quality" and "an assumed fix value". It is noted that, a fixed value may be, as an example, a statistical value (e.g., an average value, a median value, a maximum value, a minimum value and so forth) of a communication quality of the relevant communication path (communication path between the relay apparatus 40 and the wireless terminal 30, communication path between the content transmission apparatus 10 and the relay apparatus 40, and so forth).

The control information generation unit 403 of the relay apparatus 40 generates control information for controlling allocation of wireless resource for the wireless terminal 30 and notifies the generated control information to the wireless base station 20.

The control information generation unit 403 of the relay apparatus 40 generates control information including, for example, at least one of the following items:

- a communication quality evaluated by the communication quality evaluation unit 402;
- a comparison result between a communication quality evaluated by the communication quality evaluation unit 402 and a required quality;
- a target value of a communication quality between the wireless base station 20 and the wireless terminal 30;
- a priority of wireless resource allocation;
- an identifier of a wireless terminal or a bearer; and so forth,

and notifies the generated control information to the wireless base station 20.

The relay apparatus 40 can notify the control information to the wireless base station 20, for example, by writing the control information in a part of a packet transmitted from the content transmission apparatus 10 to the wireless terminal 30.

More specifically, the control information generation unit 403 of the relay apparatus 40 may use an unused area of an IP header in a packet transmitted from the content transmission apparatus 10 to the wireless terminal 30, as a writing field for the control information.

For example, the following fields included in the IP header (header of IPv4 or the like) may be used:

- reserved bits of TOS (Type of Service) field;
- reserved bits of DS (Differentiated Service) field;
- Options field;
- Padding field; and so forth.

TOS (Type of Service) field is 9th to 16th bit field (8 bits). TOS field includes first 3 bits (precedence) specifying a priority of transfer, 4 bits specifying a condition relating to delay, throughput, reliability and cost, and an unused one bit. In DS (Differentiated Services) field, a priority of transfer is set by first 6 bits (Differentiated Services Code Point: DSCP) and remaining 2 bits are unused area.

A length of Options field is indefinite and the option field is usually filled by Padding field so that the length of IP header would be a multiple of 4 bytes.

A dedicated packet that is independent of a packet transmitted from the content transmission apparatus 10 to the wireless terminal 30 may be generated by the relay apparatus 40, and the relay apparatus 40 may notify control information to the wireless base station 20, using the dedicated packet generated.

A notification of the control information from the relay apparatus 40 to the wireless base station 20 may be performed, for example:

- at a timing when the relay apparatus 40 receives a packet from the content transmission apparatus 10 or the wireless terminal 30;
- at a timing of transmitting a packet arriving from the content transmission apparatus 10 to the wireless base station 20;
- periodically (e.g., every 10 ms, 100 ms, Is, 10s and so forth); or
- at arbitrary timing.

The relay apparatus 40 has not always to notify the control information at the above notification timing. The relay apparatus 40 may notify the control information to the wireless base station 20, for example, based on a request from the wireless base station 20, when the wireless base station 20 decides that it is necessary to control allocation of wireless resource.

(Description of Operation)

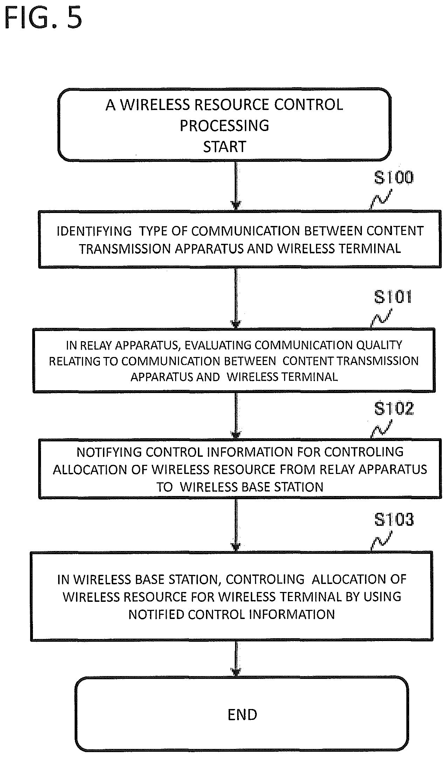

The following describes a concrete example of a wireless resource control processing by the wireless resource control system 1 according to the present embodiment with reference to a flowchart of FIG. 5.

A wireless resource control processing is started, when communication between the content transmission apparatus 10 and the wireless terminal 30 is detected by the relay apparatus 40. The communication type identification unit 401 of the relay apparatus 40 identifies a type of communication (communication type) between the content transmission apparatus 10 and the wireless terminal 30 (step S100).

Next, the communication quality evaluation unit 402 of the relay apparatus 40 evaluates a communication quality relating to the communication between the content transmission apparatus 10 and the wireless terminal 30 (step S101).

The control information generation unit 403 of the relay apparatus 40 generates control information for controlling allocation of wireless resource for the wireless terminal 30 and notifies the control information to the wireless base station 20 (step S102).

The wireless resource control unit 201 of the wireless base station 20 controls allocation of wireless resource for the wireless terminal 30 by using the notified control information, when the control information notified from the relay apparatus 40 is received (step S103).

(Example 1)

The following describes a concrete example (Example 1) of the embodiment described with reference to FIG. 2, FIG. 4 and FIG. 5. In Example 1, the relay apparatus 40 generates control information as to whether a communication quality relating to the communication between the content transmission apparatus 10 and the wireless terminal 30 meets a required quality defined by a communication type of the communication.

Then, the wireless base station 30 controls allocation of wireless resource for the wireless terminal 30, by using the control information.

A concrete example of operation will be described in association with FIG. 5.

In step S100 in FIG. 5, the communication type identification unit 401 of the relay apparatus 40 analyzes a packet relayed by the relay apparatus 40, using means such as DPI, and identifies, for example, QCI as a communication type. Here, it is assumed that QCI=6 (Video (Buffered Streaming)) is identified in the QCI table as illustrated in FIG. 1.

It is noted that identifying QCI as a communication type is only one example. As described above, application type, application name, protocol, IP address, port number and so forth, may be identified as a communication type.

In step S101 of FIG. 5, the communication quality evaluation unit 402 of the relay apparatus 40 analyzes a packet relayed by the relay apparatus 40 using such means as DPI, and evaluates a communication quality between the relay apparatus 40 and the wireless terminal 30.

More specifically, since a packet delay (Packet Delay Budget in FIG. 1) and a packet loss rate (Packet Loss Rate in FIG. 1) each are specified as a required quality for each QCI as illustrated in FIG .1, the communication quality evaluation unit 402 evaluates a packet delay and a packet loss rate from the relay apparatus 40 to the wireless terminal 3.

It is noted that evaluating a communication quality between the relay apparatus 40 and the wireless terminal 30 as a communication quality relating to the communication between the content transmission apparatus 10 and the wireless terminal 30 is just an example. As above described, a communication quality between the content transmission apparatus 10 and the relay apparatus 40 or a communication quality between the content transmission apparatus 10 and the wireless terminal 30 (communication quality of an end-to-end basis) may be evaluated.

In step S102 of FIG. 5, the control information generation unit 403 of the relay apparatus 40 decides whether or not the communication quality evaluated by the communication quality evaluation unit 402 meets a required quality, and generates control information.

More specifically, the control information generation unit 403 of the relay apparatus 40 may generate, for example, as control information, at least one of the following information items:

- binary information indicating whether or not an evaluated communication quality meets a required quality;
- information indicating a difference between an evaluated communication quality and a required quality;
- indicator with several stages, each stage indicating an extent to which an evaluated communication quality fails to meet a required quality;
- indicator with several stages, each stage indicating with how much margin an evaluated communication quality could meet a required quality; and so forth.

Here, a case will be described, where it is assumed that

- a communication type is identified as QCI= 6, and
- binary information (one bit) indicating whether a communication quality meets a required quality is generated as control information by the relay apparatus 40, which notifies the information to the wireless base station 20.

When the communication quality evaluation unit 402 of the relay apparatus 40 evaluates:

- a packet delay to be 500ms (millisecond); and
- a packet loss rate to be 0.00001% (0.000001=10E-7),

the above packet delay does not meet 300 ms which is a required quality for a packet delay. Therefore, the control information generation unit 403 sets the control information, for example, to "1 (violating a required quality)".

On the other hand, when the communication quality evaluation unit 402 of the relay apparatus 40 evaluates:

- a packet delay to be 100ms, and
- a packet loss rate to be 0.00001% (0.0000001=10E-7),

both packet delay and packet loss rate meet the required quality. Therefore, the control information generation unit 403 sets the control information for example to "0 (satisfying a required quality)".

In this case, it is sufficient if there is one bit data amount for notification of the control information from the relay apparatus 40 to the wireless base station 20.

As another example, the control information generation unit 403 of the relay apparatus 40 also can generate, as control information, an indicator with several stages, each of which indicates that the evaluated communication quality meets the required quality and an extent to which the evaluated communication quality did not meet the required quality, and the control information generation unit 403 notifies the control information to the wireless base station 20. For example, an indicator with 4 stages (e.g., in binary, "00", "01", "10", and "11") may be specified such that

- an evaluated communication quality meets a required quality (0);
- an evaluated communication quality violates a required quality slightly (1);
- an evaluated communication quality violates a required quality moderately (2); and
- an evaluated communication quality violates a required quality severely (3).

In this case, it is sufficient if there is a data amount of two bits for notification of the control information from the relay apparatus 40 to the wireless base station 20.

The relay apparatus 40 can notify the control information to the wireless base station 20 in such a way that the control information is included in a packet transmitted from the content transmission apparatus 10 to the wireless terminal 30. More specifically, the relay apparatus 40 can notify the control information to the wireless base station 20 in such a way that the control information is included in a packet that belongs to a flow (identical IP address and port number) identical with the evaluated packet. For example as above described, the relay apparatus 40 may notify the control information to the wireless base station 20, by using "Reserved Bits" of a TOS field, "Reserved Bits" of a DS field, an Options field, a Padding field, and so forth, each included in the IP header.

Alternatively, the relay apparatus 40 may determine the control information based on logged statistical information or the like, relating to an application discriminated by a communication type, and notify the control information to the wireless base station 20.

In step S103 in FIG. 5, the wireless resource control unit 201 of the wireless base station 20, by using the control information received from the relay apparatus 40, controls allocation of wireless resource for the wireless terminal 30.

The wireless resource control unit 201 of the wireless base station 20, when the control information is notified from the relay apparatus 40, as the binary information indicating whether or not a communication quality meets a required quality, may prioritize allocation of wireless resource (at least one of a frequency resource, a time resource, a physical resource block, a transmission power, a component carrier, and so forth) for the wireless terminal 30 or a bearer for which it has been decided that a communication quality fails to meet a required quality, for example.

The wireless resource control unit 201 of the wireless base station 20 may decrease allocation of wireless resource (at least one of frequency resource, time resource, physical resource block, transmission power, component carrier, and so forth) for the wireless terminal 30 or a bearer for which it has been decided that the communication quality meets the required quality.

With the above described control performed by the wireless resource control unit 201 of the wireless base station 20, a required quality may be met by increasing an allocation amount of wireless resource for communication in which the communication quality does not meet the required quality. Saving of the wireless resource may be done by decreasing an allocated amount of wireless resource for communication in which a communication quality meets the required quality.

As another example, the wireless resource control unit 201 of the wireless base station 20 can calculate an allocation priority $M_i$ of wireless resource for the communication, for example, by a following equation (1) or (2), when the control information is notified from the relay apparatus 40, as an indicator with 4 stages, such as

- a communication quality meets a required quality (0);
- a communication quality violates a required quality slightly (1);
- a communication quality violates a required quality moderately (2); and
- a communication quality violates a required quality severely (3).

$$M_i = X_i + Y_k \qquad (1)$$

$$M_i = X_i * Y_k \qquad (2)$$

Where $M_i$ indicates an allocation priority of wireless resource for a wireless terminal i (i-th wireless terminal 30) or a bearer i.

$X_i$ is a general index value of $M_i$, which is deter-mined, based on a characteristic of a wireless section between the wireless base station 20 and a wireless terminal i (i-th wireless terminal 30).

More specifically, $X_i$ is a priority that is determined, for example, by a known maximum CIR (Carrier to Interference Ratio) method or a Proportional Fairness method.

It is noted that the maximum CIR method is a scheduling method that allocates wireless resource for the wireless terminal 30 with the best communication quality between the wireless base station 20 and the wireless terminal 30. The Proportional Fairness method is a method that calculates a proportion between an actual communication quality and an average communication quality of each wireless terminal 30 in each physical resource block, for example, and allocates one or more physical resource blocks for the wireless terminal 30 with the proportion being the maximum.

$Y_k$ is a priority which is determined according to the control information notified from the relay apparatus 40 to the wireless base station 20. For example, when the above equation (1) is used in accordance with a value k (=0, 1, 2 and 3) of the above indicator with 4 stages, the following may be set:
$Y_0 = 0.0, Y_1 = 0.5, Y_2 = 1.0, Y_3 = 1.5$.

When the above equation (2) is used, the following may be set:
$Y_0 = 1.0, Y_1 = 1.1, Y_2 = 1.2, Y_3 = 1.3$.

It is noted that the wireless base station 20 may calculate information corresponding to $Y_k$, i.e., information indicating a priority of allocation of wireless resource by using the control information notified from the relay apparatus 40 thereto. Alternatively, the information indicating a priority of allocation of wireless resource itself may be notified as the control information from the relay apparatus 40 to the wireless base station 20.

As a further variation, the communication type identification unit 401 of the relay apparatus 40 may be arranged in the wireless base station 20, and the control information generation unit 403 of the relay apparatus 40 may notify the communication quality evaluated by the communication quality evaluation unit 402 to the wireless base station 20 as control information.

In this case, the communication type identification unit 401 arranged in the wireless base station 20 identifies a communication type, and the wireless resource control unit 201 of the wireless base station 20 decides whether or not "the communication quality evaluated by the communication quality evaluation unit 402 of the relay apparatus 40" received from the relay apparatus 40 as control information meets a required quality prescribed by the identified communication type.

It is noted that a method similar to the above example can be applied, as a method for controlling wireless resource according to a decision result whether or not an evaluated communication quality meets a required quality.

(Example 2)

The following describes still another example (Example 2) according to the embodiment described with reference to FIG. 2, FIG. 4 and FIG. 5. In Example 2, the relay apparatus 40 notifies a target value of a communication quality between the wireless base station 20 and the wireless terminal 30 to the wireless base station 20, as control information.

In Example 2, the wireless resource control unit 201 of the wireless base station 20 holds a target value of a communication quality (target communication quality) to be achieved between the wireless base station 20 and the wireless terminal 30.

Such a target communication quality of a wireless section is, in general, set fixedly, based on a statistical communication quality characteristic of a section higher than the wireless base station 20 (for example, a communication path between the content transmission apparatus 10 and the wireless base station 20).

For example, when

- a target value of a packet delay between the content transmission apparatus 10 and the wireless terminal 30 (packet delay of the end-to-end) is less than or equal to 100 ms, and
- an average packet delay between the content transmission apparatus 10 and the wireless base station 20 is 40 ms,

a target value of the packet delay between the wireless base station 20 and the wireless terminal 30 is set to 60 ms. The wireless resource control unit 201 of the wireless base station 20 controls allocation of wireless resource so as to achieve the target value.

In Example 2, the wireless base station 20 dynamically changes a target value of a communication quality of a wireless section based on the control information notified from the relay apparatus 40 and an evaluation result of the communication quality in the communication quality evaluation unit 402 of the relay apparatus 40.

Operation of step S100 in FIG. 5 in Example 2 is the same as that in Example 1 and description thereof will be omitted.

In step S101 in FIG. 5, the communication quality evaluation unit 402 of the relay apparatus 40 analyzes a packet relayed by the relay apparatus 40 by using such means as DPI, and evaluates a communication quality between the content transmission apparatus 10 and the relay apparatus 40. For example, the communication quality evaluation unit 402 evaluates an average packet delay between the content transmission apparatus 10 and the relay apparatus 40.

In step S102 in FIG. 5, the control information generation unit 403 of the relay apparatus 40 notifies the average packet delay between the content transmission apparatus 10 and the relay apparatus 40, which is evaluated by the communication quality evaluation unit 402, to the wireless base station 20 as control information.

In step S103 in FIG. 5, the wireless resource control unit 201 of the wireless base station 20 updates a target communication quality that the wireless base station 20 holds, by using the control information notified from the relay apparatus 40. The wireless resource control unit 201 controls allocation of wireless resource.

As an example case, it is assumed that the target value of a packet delay between the wireless base station 20 an the wireless terminal 30 is 60 ms, which is set on a premise that a packet delay between the content transmission apparatus 10 and the relay apparatus 40 is 10 ms.

In this case, when it is decided that an actual average packet delay between the content transmission apparatus 10 and the relay apparatus 40 is 20 ms, based on control information notified from the relay apparatus 40, the wireless base station 20 changes the target value (60 ms) of the packet delay held thereby to 50 ms (= 60 ms - 10 ms), by correcting (reducing) by 10 ms (= 20 ms - 10 ms) that is a difference (delay) from a prerequisite value (10 ms) of the packet delay between the content transmission apparatus 10 and the relay apparatus 40.

In the above case, the target value of the communication quality of wireless section is calculated in the wireless resource control unit 201 of the wireless base station 20, but the present invention is, as a matter of course, not limited to such configuration. For example, the target value of the communication quality of a wireless section may be calculated in the relay apparatus 40, and the calculated result (the target value of the communication quality of a wireless section) may be notified to the wireless base station 20 as control information.

As described above, in the wireless resource control system 1 according to the present embodiment, the communication type identification unit 401 identifies a communication type, and the communication quality evaluation unit 402 of the relay apparatus 40 evaluates a communication quality relating to communication between the content transmission apparatus 10 and the wireless terminal 30. The wireless resource control unit 201 of the wireless base station 20 controls allocation of wireless resource for the wireless terminal 30 based on the communication quality relating to communication between the content transmission apparatus 10 and the wireless terminal 30. As a result, it is possible to control wireless resource in the wireless base station 20 so as to meet a required quality for each communication type on an end-to-end basis, between the content transmission apparatus 10 and the wireless terminal 30.

<Third Example Embodiment>

The following describes a third embodiment with reference to drawings.

(Description of Arrangement)

An arrangement of the wireless resource control system 1 according to the present embodiment is the same as the wireless resource control system 1 described according to the second embodiment of the present invention with reference to FIG. 2.

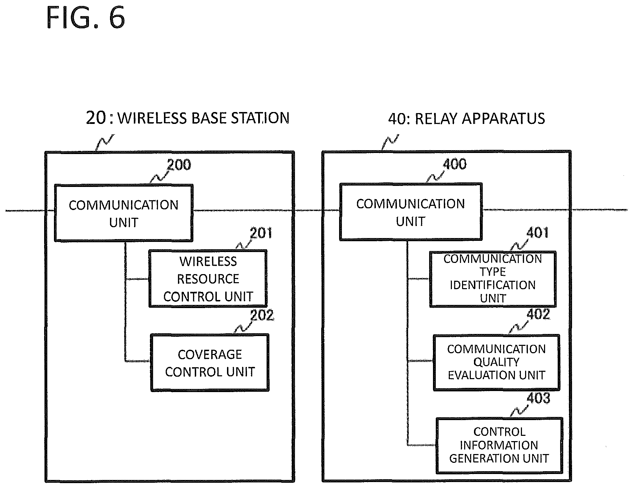

FIG. 6 is a diagram illustrating an arrangement example of the wireless base station 20 according to the present embodiment. There is a difference between the wireless base station 20 according to the present embodiment and the wireless base station 20 according to the second embodiment, in that the wireless base station 20 according to the present embodiment includes further a coverage control unit 202. The following describes the present embodiment mainly focusing on difference from the second embodiment and the description of the same part will be omitted appropriately to avoid duplication.

In FIG. 6, the coverage control unit 202 is equipped with a function to control coverage of a wireless cell managed by the wireless base station 20. Here, "coverage" of a wireless cell means an area in which a wireless terminal can establish a wireless communication line with a predetermined wireless quality for the wireless cell.

A predetermined wireless quality is a quality in which SNR (Signal to Noise Ratio), SINR (Signal to Interference and Noise Ratio) or the like of radio wave arriving from the wireless cell of the wireless base station 20 for example, meets a predetermined value required in order to maintain a basic service (establishment of SRB (Signaling Wireless bearer)) and acquisition of information transmitted through a DL (Down Link) common channel).

The wireless base station 20, in order to

- extend;

- narrow; or

- change a shape of,

coverage of a wireless cell,
controls one or more radio parameters such as:

- transmission power of a wireless cell (e.g., maximum transmission power of downlink in a wireless cell);
- antenna tilt angle of a wireless cell;
- antenna azimuth angle of a wireless cell; and
- antenna directivity of a wireless cell.

The radio parameter controlling coverage of the wireless cell may include an offset parameter used for selection of a wireless cell (e.g., Qoffset which is used to compare wireless qualities among the wireless cells), a handover parameter and so forth. Qoffset is a parameter for selecting a wireless cell and is used as an offset for a received power of each of neighboring wireless cells, when a wireless terminal in an idle state selects a serving cell (belonging cell) based on a measured value of a received power of a neighboring wireless cell.

The handover parameter may include, for example, the followings:

- CIO (Cell Individual Offset);
- Event A1 Threshold;
- Event A2 Threshold;
- Event A3 Offset;
- Event A4 Offset;
- Event A5 Threshold;
- Event B1 Threshold;
- Event B2 Threshold;
- Hysteresis (Hysteresis of wireless quality);
- Time to Trigger (Hysteresis in time direction: guard time from establishment of a transmission condition for a measurement report until transmission of the measurement report); and so forth.

Event A1 is an event to report a measurement result (MR: Measurement Report), when a wireless quality (e.g., a received power) of a wireless cell (serving cell) connected by a wireless terminal is higher than a threshold value.

Event A2 is an event to report a measurement result (MR), when a wireless quality (e.g., a received power) of a serving cell is lower than a threshold value.

Event A3 is an event to report a measurement result (MR), when a wireless quality (e.g., a received power) of an adjacent cell is higher than a serving cell by a predetermined amount.

Event A4 is an event to report a measurement result (MR), when a wireless quality (e.g., a received power) of the adjacent cell is higher than a threshold value.

Event A5 is an event to report a measurement result (MR), when a wireless quality (e.g., a received power) of a serving cell is lower that a threshold value 1 and the wireless quality (e.g., a received power) of an adjacent cell is higher than a threshold value 2.

Event B1 is an event to report a measurement result (MR), when a wireless quality (e.g., a received power) of an adjacent cell of Inter-RAT (Radio Access Technology) (e.g., LTE -> WCDMA (registered trademark), LTE -> GSM (registered trademark) and so forth) is higher that a threshold value.

Event B2 is an event to report a measurement result (MR), when a wireless quality (e.g., a received power) of a serving cell is lower that a threshold value 1 and the wireless quality (i.e., a received power) of an adjacent cell of Inter-RAT is higher a threshold value 2.

Furthermore, the wireless base station 20 may have a function to instruct a change of a coverage not only for a wireless cell managed by the wireless base station 20 but also for a wireless cell adjacent to the wireless cell managed by the wireless base station 20.

(Description of Operation)

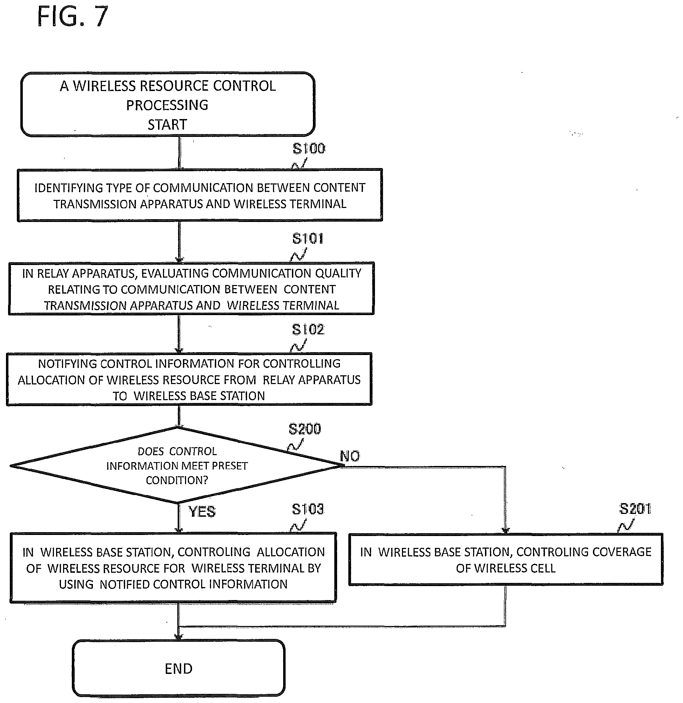

The following describes a concrete example of a wireless resource control processing by the wireless resource control system 1 according to the present embodiment with reference to a flowchart of FIG. 7.

In FIG. 7, operations from step S100 to step S102 are the same as those of the second embodiment described with reference to FIG. 5.

In step S200, the wireless resource control unit 201 of the wireless base station 20 decides whether or not control information notified from the relay apparatus 40 meets the predetermined condition.

The following describes a case as an example, in which the control information notified from the relay apparatus 40 to the wireless base station 20 is such an extent that a communication quality relating to communication between the content transmission apparatus 10 and the wireless terminal 30 fails to meet a required quality prescribed for a communication type of the communication.

In this case, the wireless resource control unit 201 of the wireless base station 20 decides whether or not an extent that a communication quality does not meet a required quality is great. For example, when the control information is notified from the relay apparatus 40 as an indicator with 4 stages, such as

- a communication quality meets a required quality (0);
- a communication quality violates a required quality slightly (1);
- a communication quality violates a required quality moderately (2); and
- a communication quality violates a required quality severely (3),

the wireless resource control unit 201 of the wireless base station 20 decides whether or not a communication quality violates a required quality severely (3).

When an extent to which the communication quality violates the required quality is small, the wireless resource control unit 201 performs control of allocation of wireless resource similar to that of the second embodiment (step S103).

On the other hand, when an extent to which the communication quality violates the required quality is severe, the wireless resource control unit 201 instructs the coverage control unit 202 to change a coverage of the wireless cell.

The coverage control unit 202 controls a coverage of the wireless cell managed by the wireless base station 20 or a coverage of a wireless cell adjacent to the wireless cell managed by the wireless station 20 (step S201).

For a case wherein an improvement effect of a communication quality only by controlling an allocation amount of wireless resource is limited, a further improvement effect of a communication quality may be expected by controlling a coverage of the wireless cell, as described above.

It is noted that decision processing whether or not control information meets a preset condition (step S200 in FIG. 7) is not necessarily needed to be performed by the wireless base station 20, but may well be performed by relay apparatus 40, for example.

In this case, the relay apparatus 40 may notice to the wireless base station 20, control information that includes information indicating which of a wireless resource allocation control processing of (step S103 in FIG. 7) or a wireless cell coverage control processing (step S201 in FIG. 7) should be executed in the wireless base station 20, based on a decision result whether or not the control information performed in the relay apparatus 40 meets a preset condition.

As described above, in the wireless resource control system 1 according to the present embodiment, a coverage of wireless cell can be controlled by the coverage control unit 202 of the wireless base station 20. As a result, the wireless resource in the wireless base station 20 may be controlled so as to meet a required quality for each communication type, on an end-to-end basis, between the content transmission apparatus 10 and the wireless terminal 30, even when the communication quality is low due to inappropriate size or shape of the wireless cell, for example.

<Fourth Example Embodiment>

The following describes a fourth example embodiment of the present invention with reference to drawings.

(Description of Arrangement)

An arrangement of the wireless resource control system 1 according to the present embodiment is the same as that of the wireless resource control system 1 according to the second embodiment described with reference to FIG. 2.

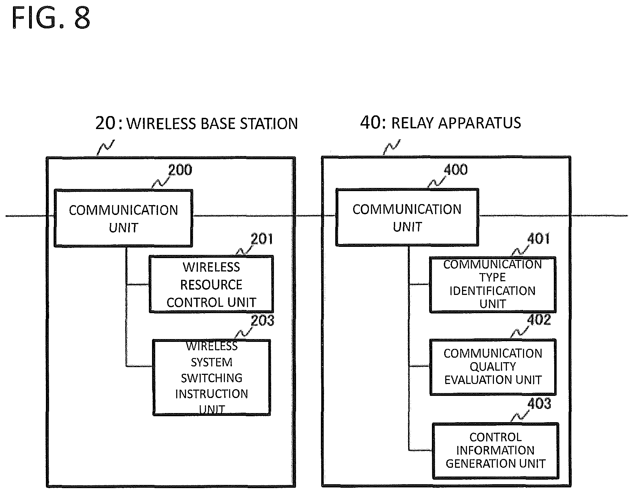

FIG. 8 illustrates an example of an arrangement of the wireless base station 20 according to the present embodiment. The wireless base station 20 according to the present embodiment, different from the wireless base station 20 according to the second embodiment, includes a wireless system switching instruction unit 203. The following describes mainly the difference from the second embodiment, while the description of the same part will be omitted as appropriate to avoid duplication.

The wireless system switching instruction unit 203 of the wireless base station 20 instructs the wireless terminal 30 to perform switchover of a wireless system used by the wireless terminal 30 to perform wireless communication. The wireless system switching instruction unit 203 instructs which wireless system is to be used by the wireless terminal 30, for example, when the wireless terminal 30 supports two or more wireless systems such as LTE, LTE-Advanced, UMTS, GSM (registered trademark), Wi-Fi (registered trademark), wireless LAN, WiMAX, CDMA2000 (registered trademark), HSPA, and so forth. Here, the wireless system instructed to the wireless terminal 30 may be indicated, for each application (i.e., each service), each IP flow (e.g., each TCP connection of Multi-Path (MP) TCP with multiple paths of TCP connection), or, each wireless terminal (i.e., all communication of the wireless terminal 30). It is noted that instructing a wireless system to be used by the wireless terminal 30 may be called "traffic steering".

As a concrete example of instruction of switching over a wireless system, when a wireless terminal 30 supports LTE and UMTS, the wireless system switching instruction unit 203 of the wireless base station 20 may instruct the wireless terminal 30 using LTE (or UMTS) to perform inter-system handover in heterogeneous wireless systems (Inter-RAT Handover) from LTE (or UMTS) to UMTS (or LTE). As another concrete example, when the wireless terminal 30 supports LTE and wireless LAN, the wireless system switching instruction unit 203 of the wireless base station 20 may instruct the wireless terminal 30 using LTE to perform traffic steering to the wireless LAN. It is noted that the traffic steering may utilize an ANDSF (Access Network Discovery and Selection Function), a standard specification thereof being prescribed in 3GPP (e.g., 3GPP TS 24.312, Access Network Discovery and Selection Function (ANDSF) Management Object (MO)).

The wireless system switching instruction unit 203 of the wireless base station 20 may instruct the wireless terminal 30 to perform switchover (handover) to a mobile network of a different mobile operator. For example, when the wireless terminal 30 is connecting to a mobile network A in such an environment in which the mobile network A managed by a mobile operator A and a mobile network B managed by a mobile operator B are present, the wireless system switching instruction unit 203 of the wireless base station 20 may instruct the wireless terminal 30 to perform switchover (handover) from the mobile network A to the mobile network B. Further, instead of the mobile network B, the wireless system switching instruction unit 203 can instruct the wireless terminal 30 to perform switchover (handover) to a mobile network C (Network Sharing) shared by both the mobile network A and the mobile network B.

The wireless system switching instruction unit 203 of the wireless base station 20 may instruct the wireless terminal 30 to perform switchover (handover) to a cell of the same wireless system but with a different frequency band, wherein a wireless system is taken in a broad sense. Further, the wireless system switching instruction unit 203 of the wireless base station 20 may the wireless terminal 30 to perform switchover (handover) to a cell of the same wireless system but a different frequency managed by a different wireless base station. More specifically, it is possible to utilize Dual Connectivity (DC), a standard specification thereof being defined in 3GPP (as to Dual Connectivity (DC) (Reference may be made, for example, to "8.1 Architecture and protocol enhancements for Dual connectivity" in 3GPP TR 36.842 V12.0.0 (2013-12)). For example, in the Dual Connectivity (DC), the wireless system switching instruction unit 203 of the wireless base station 20 may switch over a wireless cell used by a wireless terminal, between a wireless cell managed by a master wireless base station (Master eNB : MeNB) which manages a wireless connection (RRC (Radio Resource Control) Connection) with the wireless terminal and a wireless cell managed by a secondary wireless base station (Secondary eNB: SeNB). More specifically, the wireless system switching instruction unit 203 may instruct switching of:

- a wireless bearer (MCG Bearer) using only Master Cell Group (MCG), that is a wireless cell group managed by a master wireless base station (MeNB);
- a wireless bearer (SCG Bearer) using only Secondary Cell Group (SCG), that is a wireless cell group managed by a secondary wireless base station (SeNB); and
- a wireless bearer (Split Bearer) using both Master Cell Group (MCG) and Secondary Cell Group (SCG).

It is noted that in the case of Dual Connectivity (DC), the wireless system switching instruction unit 203 may preferably be provided in the master wireless base station (MeNB). But the wireless system switching instruction unit 203 may alternatively be provided in the secondary wireless base station (SeNB).

(Description of Operation)

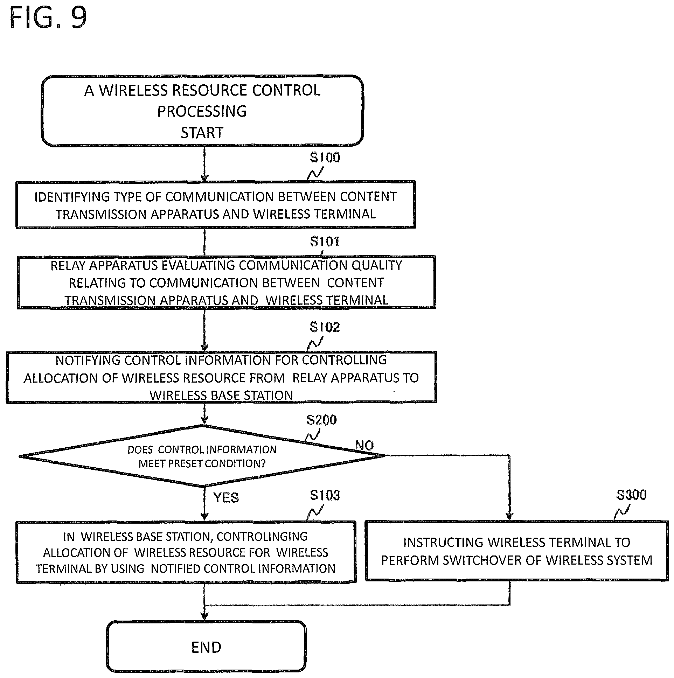

The following describes a concrete example of a wireless resource control processing by the wireless resource control system 1 according to the present embodiment with reference a flowchart of FIG. 9. In FIG. 9, processing from step S100 to step S103 and step S200 each are the same as those of the second embodiment described with reference to FIG. 5 or the third embodiment described with reference FIG. 7. In the present embodiment, the step S201 in FIG.7 is replaced by step S300.

Referring to FIG. 9, in step S300, the wireless system switching instruction unit 203 of the wireless base station 20 instructs the wireless terminal 30 to perform switchover of a wireless system.

For example, the relay apparatus 40 may evaluate a communication quality relating to communication between the content transmission apparatus 10 and the wireless terminal 30, generates control information by evaluating whether or not the communication quality meets a required quality prescribed for a communication type of the communication, and notifies the control information to the wireless base station 20.

Then, on reception of the control information by the wireless base station 20, the wireless system switching instruction unit 203 instructs the wireless terminal 30 to perform switchover of a wireless system, when an extent of deterioration from the required quality of the communication quality is more than or equal to a preset amount. It is noted that the wireless system switching instruction unit 203 may add a new wireless system, instead of switching over a wireless system. The wireless system switching instruction unit 203 may select a plurality of wireless systems, each as a switch over target of a wireless system for the wireless terminal 30 to perform switchover to the selected ones.

Selection of a plurality of wireless systems, such as LTE and HSPA may be applied to a technique using Multi-RAT (Radio Access Technology), for example, MRCA (Multi-RAT Carrier Aggregation) or the like. Carrier aggregation (CA) achieves broadening of a frequency band by bundling a plurality of frequency blocks (component carriers) for LTE, each frequency block, as a basic unit, having a bandwidth of, for example, 20 MHz (MegaHerz), at maximum. In MRCA, a plurality of frequency blocks of RAT are bundled for use.

The wireless base station 20 may be so configured as to decide whether or not to instruct the wireless terminal 30 to switch a wireless system, by using control information notified from the relay apparatus 40. Alternatively, information regarding whether or not to instruct the wireless terminal 30 to perform switchover of a wireless system, and/or, information on which wireless system is to be used, may be included in a part of the control information notified by the relay apparatus 40.

The wireless base station 20 can also instruct the wireless terminal 30 to measure other wireless system(s), and to measure Inter-RAT (Radio Access Technology). The wireless base station 20 may decide which wireless system is to be used by the wireless terminal 30, based on a measurement result (Measurement Report) reported by the wireless terminal 30.

The wireless terminal 30, for example, may measure a wireless quality and/or a traffic load of a wireless base station and/or an AP (Access Point) of other wireless system(s), each of which the wireless terminal 30 can detect, or, the wireless terminal 30 may obtain the wireless quality and/or traffic load in some way. The wireless terminal 30 may report the wireless quality and/or traffic load to the wireless base station 20. Then, the wireless base station 20 selects a wireless system with a good wireless quality or low traffic load to instruct the wireless terminal 30 to switch over to the wireless system selected. It is noted that here the wireless quality may be a received power and a desired signal versus interference signal power ratio measured in a mobile access network section (wireless section). For example, the wireless quality may be such as to include at least one of RSCP (Received Signal Code Power), RSRP (Reference Signal Received Power), RSSI (Received Signal Strength Indicator), SINR (Signal to Interference plus Noise Ratio), SIR (Signal to Interference Ratio), Ec/No (received Energy per Chip (RSCP) / power density in the band (RSSI)), RSRQ (Reference Signal Received Quality), and so forth. It is noted that the wireless quality may include a propagation loss measured in a mobile access network section (wireless section). The traffic load may be a basis service set (BSS) load transmitted, for example, from an access point (AP) of a wireless LAN.

As described above, in the wireless resource control system 1 according to the present embodiment, the wireless system switching instruction unit 203 of the wireless base station 20 is enabled to instruct the wireless terminal 30 to perform switchover of a wireless system so as to meet a required quality for each communication type on an end-to-end basis.

As described above, according to each of the embodiments and examples, regarding "a communication quality relating to communication between a content transmission apparatus and a wireless terminal", a communication path to be evaluated may include at least a part of a section (i.e., a communication path between the wireless base station and the content transmission apparatus) different from a mobile access network section (wireless section) between the wireless base station and the wireless terminal, out of communication paths connecting, on an end-to-end basis, the content transmission apparatus and the wireless terminal.

It is possible to change/adjust the embodiments or examples in the frame of all disclosure (including claims) of the present invention, and further based on basic technical thought thereof. Also, various combinations or selections of various disclosed elements (including each element of each claim, each element of each embodiment, each element of each figure and so forth) are possible in the frame of claims of the present invention. It is obvious that the present invention includes various variations and modifications which could be made by a person skilled in the art based on the all disclosure including claims and the technical thought.

The above described embodiments are added as follows (however, it is not limited to the following).

(Supplementary Note 1)

A wireless resource control system comprising:

a content transmission apparatus;
a wireless terminal;
a wireless base station that receives data transmitted from the content transmission apparatus and transmits the data wirelessly to the wireless terminal; and
a relay apparatus arranged on a communication path between the content transmission apparatus and the wireless base station, wherein
the relay apparatus comprises:

a communication quality evaluation unit that evaluates a communication quality relating to communication between the content transmission apparatus and the wireless terminal; and

a control information generation unit that generates control information for controlling allocation of wireless resource for the wireless terminal, based on the communication quality, wherein

the wireless base station comprises:
a wireless resource control unit that controls allocation of wireless resource for the wireless terminal, based on the control information.

(Supplementary Note 2)

The wireless resource control system according to Supplementary Note 1, wherein the relay apparatus or the wireless base station comprises further a communication type identification unit that identifies a type of communication executed between the content transmission apparatus and the wireless terminal, wherein

the wireless resource control unit controls allocation of wireless resource for the wireless terminal, based on an evaluation result of the communication quality, by using a criterion corresponding to the type of the communication.

(Supplementary Note 3)

The wireless resource control system according to Supplementary Note 2, wherein the wireless resource control unit controls allocation of wireless resource possessed by the wireless base station, according to a comparison result of the communication quality with a required quality that is specified for the type of the communication.

(Supplementary Note 4)

The wireless resource control system according to Supplementary Note 2, wherein the wireless base station comprises a coverage control unit that controls coverage of a wireless cell managed by the wireless base station, according to a comparison result of the communication quality with a required quality that is specified for the type of the communication.

(Supplementary Note 5)

The wireless resource control system according to Supplementary Note 2, wherein the wireless base station comprises a wireless system switching instruction unit that instructs the wireless terminal to perform switchover of a wireless system used by the wireless terminal, according to a comparison result of the communication quality with a required quality that is specified for the type of the communication.

(Supplementary Note 6)

The wireless resource control system according to any one of Supplementary Notes 1 to 5, wherein the communication quality evaluation unit evaluates the communication quality by using at least any of
a first communication quality between the relay apparatus and the wireless terminal;
a second communication quality between the content transmission apparatus and the relay apparatus; and
a communication quality of a communication path including at least part of a communication path between the wireless base station and the content transmission apparatus.

(Supplementary Note 7)

The wireless resource control system according to Supplementary Note 6, wherein the communication quality evaluation unit evaluates the communication quality by calculating a third communication quality between the content transmission apparatus and the wireless terminal by using both of the first communication quality and the second communication quality.

(Supplementary Note 8)

The wireless resource control system according to any one of Supplementary Notes 1 to 7, wherein the wireless resource control unit updates a target value of a fourth communication quality between the wireless base station and the wireless terminal by using the control information.

(Supplementary Note 9)

The wireless resource control system according to Supplementary Note 8, wherein the control information includes at least any item of:

information indicating the communication quality;
information indicating a comparison result of the communication quality with a required quality that is specified for the type of the communication;
information indicating the target value of the fourth communication quality;
information indicating an identifier of the wireless terminal or a bearer;
information indicating a priority for allocation of the wireless resource;
information instructing to change a coverage of a wireless cell managed by the wireless base station; and
information instructing the wireless terminal to perform switchover of a wireless system.

(Supplementary Note 10)

A relay apparatus arranged on a communication path between a content transmission apparatus that transmits a content via a wireless base station to a wireless terminal and the wireless base station, the relay apparatus comprising:

> a communication quality evaluation unit that evaluates a communication quality relating to communication between the content transmission apparatus and the wireless terminal;
> a control information generation unit that generates control information for controlling allocation of wireless resource of the wireless base station for the wireless terminal, based on the communication quality; and
> a communication unit that notifies the control information to the wireless base station.

(Supplementary Note 11)

The relay apparatus according to Supplementary Note 10, characterized in further comprising a communication type identification unit that identifies a type of communication executed between the content transmission apparatus and the wireless terminal.

(Supplementary Note 12)

The relay apparatus according to Supplementary Note 10 or 11, wherein the communication quality evaluation unit evaluates the communication quality by using any one of:

> a first communication quality between the relay apparatus and the wireless terminal;
> a second communication quality between the content transmission apparatus and the relay apparatus; and
> a communication quality of a communication path including at least a part of a communication path between the wireless base station and the content transmission apparatus.

(Supplementary Note 13)

The relay apparatus according to Supplementary Note 12, wherein the communication quality evaluation unit evaluates the communication quality by calculating a third communication quality between the content transmission apparatus and the wireless terminal by using both of the first communication quality and the second communication quality.

(Supplementary Note 14)

The relay apparatus according to Supplementary Note 10, wherein

the control information includes at least any item of:

> information indicating the communication quality;
> information indicating the comparison result between the required quality that is specified for the type of the communication and the communication quality;
> information indicating the fourth communication quality between the wireless base station and the wireless terminal;
> information indicating an identifier of the wireless terminal or bearer;
> information indicating a priority for an allocation of the wireless resource;
> information instructing to change coverage of a wireless cell managed by the wireless base station; and
> information instructing to switch a wireless system for the wireless terminal.

(Supplementary Note 15)

A wireless base station that transmits wirelessly data transmitted from a content transmission apparatus to a wireless terminal, the wireless base station comprising:
a wireless resource control unit that receives control information, based on an evaluation result of a communication quality relating to communication between the content transmission apparatus and a wireless terminal, from a relay apparatus arranged on the communication path between the content transmission apparatus and the wireless base station, and that controls allocation of wireless resource for the wireless terminal based on the control information.

(Supplementary Note 16)

The wireless base station according to Supplementary Note 15, wherein the wireless resource control unit controls allocation of wireless resource for the wireless terminal, based on an evaluation result of the communication quality by using a criterion corresponding to a type of communication executed between the content transmission apparatus and the wireless terminal.

(Supplementary Note 17)

The wireless base station according to Supplementary Note 16, wherein the wireless resource control unit controls the allocation of wireless resource possessed by the wireless base station, according to a comparison result of the communication quality with a required quality that is specified for the type of the communication.

(Supplementary Note 18)

The wireless base station according to Supplementary Note 16, comprising
a coverage control unit controlling coverage of a wireless cell managed by the wireless base station, according to the a comparison result of the communication quality with a required quality that is specified for the type of the communication.

(Supplementary Note 19)

The wireless base station according to Supplementary Note 16, comprising a wireless system switching instruction unit that instructs the wireless terminal to perform switchover of a wireless system used by the wireless terminal, according to a comparison result of the communication quality with a required quality that is specified for the type of the communication.

(Supplementary Note 20)

The wireless base station according to any one of Supplementary Notes 15 to 19, wherein the wireless resource control unit updates a target value of a fourth communication quality between the wireless base station and the wireless terminal by using the control information.

(Supplementary Note 21)

The wireless base station according to Supplementary Note 20, wherein the control information includes at least any item of:

information indicating the communication quality;
information indicating the comparison result between the required quality that is specified for the type of the communication and the communication quality;
information indicating the target value of the fourth communication quality;
information indicating an identifier of the wireless terminal or bearer;
information indicating a priority for an allocation of the wireless resource;
information instructing to change coverage of a wireless cell managed by the wireless base station; and
information instructing to switch a wireless system for the wireless terminal.

(Supplementary Note 22)

A wireless resource control method comprising:

evaluating a communication quality relating to communication between the content transmission apparatus and the wireless terminal; and
generating control information for controlling allocation of wireless resource for the wireless terminal, based on the communication quality to notify the control information to the wireless base station; and
controlling, by the wireless base station, allocation of wireless resource for the wireless terminal, based on the control information.

(Supplementary Note 23)

The wireless resource control method according to Supplementary Note 22, wherein the relay apparatus or the wireless base station identifies a type of communication executed between the content transmission apparatus and the wireless terminal, and
the wireless base station controls the allocation of the wireless resource for the wireless terminal, based on the evaluation result of the communication quality by using a criterion corresponding to the type of the communication.

(Supplementary Note 24)

The wireless resource control method according to Supplementary Note 23, wherein the wireless base station controls the allocation of wireless resource possessed by the wireless base station, according to a comparison result in the relay apparatus or the wireless base station between a required quality that is specified for the type of the communication and the communication quality,.

(Supplementary Note 25)

The wireless resource control method according to Supplementary Note 23, wherein the wireless base station controls coverage of a wireless cell managed by the wireless base station, according a the comparison result in the relay apparatus or the wireless base station between the required quality that is specified for the type of the communication and the communication quality.

(Supplementary Note 26)

The wireless resource control method according to Supplementary Note 23, wherein the wireless base station instructs the wireless terminal to perform switchover of a wireless system used by the wireless terminal, according to a comparison result in the relay apparatus or the wireless base station between a required quality that is specified for the type of the communication and the communication quality.

(Supplementary Note 27)

The wireless resource control method according to any one of Supplementary Notes 22 to 26, wherein the relay apparatus evaluates the communication quality by using at least any of

a first communication quality between the relay apparatus and the wireless terminal;

a second communication quality between the content transmission apparatus and the relay apparatus; and

a communication quality of a communication path including at least a part of a communication path between the wireless base station and the content transmission apparatus.

(Supplementary Note 28)

The wireless resource control method according to Supplementary Note 27, wherein the relay apparatus evaluates the communication quality, by calculating a third communication quality between the content transmission apparatus and the wireless terminal by using both of the first communication quality and the second communication quality.

(Supplementary Note 29)

The wireless resource control method according to any one of Supplementary Notes 22 to 28, wherein the wireless base station updates a target value of a fourth communication quality between the wireless base station and the wireless terminal by using the control information.

(Supplementary Note 30)

The wireless resource control method according to Supplementary Note 29, wherein the control information includes at least any item of:

information indicating the communication quality;
information indicating the comparison result between the required quality that is specified for the type of the communication and the communication quality;
information indicating the fourth communication quality;
information indicating an identifier of the wireless terminal or bearer;
information indicating a priority for an allocation of the wireless resource;
information instructing to change coverage of a wireless cell managed by the wireless base station; and
information instructing to switch a wireless system for the wireless terminal.

(Supplementary Note 31)

A program for causing a computer constituting a relay apparatus arranged on a communication path between a wireless base station and a content transmission apparatus that transmits a content via the wireless base station to a wireless terminal to execute:

a communication quality evaluation processing that evaluates a communication quality relating to communication between the content transmission apparatus and the wireless terminal; and

a control information generation processing that generates control information for controlling allocation of wireless resource of the wireless base station for the wireless terminal.

(Supplementary Note 32)

The program according to Supplementary Note 31, further causing the computer to execute a communication type identification processing that identifies a type of communication between the content transmission apparatus and the wireless terminal in the computer.

(Supplementary Note 33)

The program according to Supplementary Note 31 ore 32, wherein the communication quality evaluation processing evaluates the communication quality by using any of:

a first communication quality between the relay apparatus and the wireless terminal;
a second communication quality between the content transmission apparatus and the relay apparatus; and
a communication quality for a communication path including at least a part of the communication path between the wireless base station and the content transmission apparatus.

(Supplementary Note 34)

The program according to Supplementary Note 33, wherein the communication quality evaluation processing evaluates the communication quality by calculating a third communication quality between the content transmission apparatus and the wireless terminal by using both of the first communication quality and the second communication quality.

(Supplementary Note 35)

The program according to Supplementary Note 31, wherein
the control information includes at least any item of:

information indicating the communication quality;
information indicating the comparison result between the required quality that is specified for the type of the communication and the communication quality;
information indicating the target value of the fourth communication quality between the wireless base station and the wireless terminal;

information indicating an identifier of the wireless terminal or bearer;

information indicating a priority for an allocation of the wireless resource;

information instructing to change coverage of a wireless cell managed by the wireless base station; and

information instructing to switch a wireless system for the wireless terminal.

(Supplementary Note 36)

A program that causes a computer constituting a wireless base station to execute:

a wireless resource control processing that receives control information based on an evaluation result of a communication quality relating to communication between a wireless terminal and a content transmission apparatus that transmits a content via the wireless base station to the wireless terminal and that controls allocation of wireless resource for the wireless terminal, based on the control information.

(Supplementary Note 37)

The program according to Supplementary Note 36, wherein the wireless resource control processing controls the allocation of the wireless resource for the wireless terminal, based on the evaluation result of the communication quality by using a criterion corresponding to the type of communication executed between the content transmission apparatus and the wireless terminal.

(Supplementary Note 38)

The program according to Supplementary Note 37, wherein the wireless resource control processing controls the allocation of wireless resource possessed by the wireless base station, based on a comparison result between a required quality that is specified for the type of the communication and the communication quality.

(Supplementary Note 39)

The program according to Supplementary Note 37, causing the computer to execute a coverage control processing that controls a coverage of a wireless cell managed by the wireless base station, according to a comparison result of the communication quality with a required quality that is specified for the type of the communication.

(Supplementary Note 40)

The program according to Supplementary Note 37, causing the computer to execute a wireless system switching instruction processing that instructs the wireless terminal to perform switchover of a wireless system used by the wireless terminal, according to a comparison result of the communication quality with a required quality that is specified for the type of the communication.

(Supplementary Note 41)

The program according to one of Supplementary Notes 36 to 40, wherein the wireless resource control processing updates a target value of the fourth communication quality between the wireless base station and the wireless terminal by using the control information.

(Supplementary Note 42)

The program according to Supplementary Note 41, wherein the control information includes at least any item of:

information indicating the communication quality;

information indicating the comparison result between the required quality that is specified for the type of the communication and the communication quality;

information indicating the fourth communication quality;

information indicating an identifier of the wireless terminal or bearer;

information indicating a priority for an allocation of the wireless resource;

information instructing to change coverage of the wireless cell managed by the wireless base station; and

information instructing to switch the wireless system for the wireless terminal.

[Reference Signs List]

| | |
|---|---|
| 1 | wireless resource control system |
| 10 | content transmission apparatus |
| 20 | wireless base station |
| 30 | wireless terminal |
| 40 | relay apparatus |
| 200 | communication unit |
| 201 | wireless resource control unit |
| 202 | coverage control unit |
| 203 | wireless system switching instruction unit |
| 400 | communication unit |
| 401 | communication type identification unit |
| 402 | communication quality evaluation unit |
| 403 | control information generation unit |

**Claims**

**1.** A wireless resource control system (1) comprising:

a content transmission apparatus (10);
a wireless terminal (30);
a wireless base station (20) that is configured to receive data transmitted from the content transmission apparatus (10) and to transmit the data wirelessly to the wireless terminal (30); and
a relay apparatus (40) arranged on a communication path between the content transmission apparatus (10) and the wireless base station (20), wherein
the relay apparatus (40) comprises:

> a communication quality evaluation unit (402) that is configured to evaluate a communication quality relating to communication between the content transmission apparatus (10) and the wireless terminal (30); and
> a control information generation unit (403) that is configured to generate control information for controlling allocation of wireless resource for the wireless terminal (30), based on the communication quality, wherein

the wireless base station (20) comprises
a wireless resource control unit (201) that is configured to control allocation of wireless resource for the wireless terminal (30), based on the control information, wherein the communication quality evaluation unit (402) is configured to evaluate the communication quality by using :

> a first communication quality between the relay apparatus (40) and the wireless terminal (30); and
> a second communication quality between the content transmission apparatus (10) and the relay apparatus (40).

2. The wireless resource control system (1) according to claim 1, wherein the relay apparatus (40) or the wireless base station (20) further comprises
a communication type identification unit (401) that is configured to identify a type of communication executed between the content transmission apparatus (10) and the wireless terminal (30), wherein
the wireless resource control unit (201) is configured to control allocation of wireless resource for the wireless terminal (30), based on an evaluation result of the communication quality, by using a criterion corresponding to the type of the communication.

3. The wireless resource control system (1) according to claim 2, wherein the wireless resource control unit (201) is configured to control allocation of wireless resource possessed by the wireless base station (20), according to a comparison result of the communication quality with a required quality that is specified for the type of the communication.

4. The wireless resource control system (1) according to claim 2, wherein the wireless base station (20) comprises
a coverage control unit (202) that is configured to control coverage of a wireless cell managed by the wireless base station (20), according to a comparison result of the communication quality with a required quality that is specified for the type of the communication.

5. The wireless resource control system (1) according to claim 2, wherein the wireless base station (20) comprises
a wireless system switching instruction unit (203) that is configured to instruct the wireless terminal (30) to perform switchover of a wireless system used by the wireless terminal (30), according to a comparison result of the communication quality with a required quality that is specified for the type of the communication.

6. The wireless resource control system (1) according to any one of claims 1 to 5, wherein the communication quality evaluation unit (402) is configured to evaluate the communication quality by calculating a third communication quality between the content transmission apparatus (10) and the wireless terminal (30) by using both of the first communication quality and the second communication quality.

7. The wireless resource control system (1) according to any one of claims 1 to 6, wherein the wireless resource control unit (201) is configured to update a target value of a fourth communication quality between the wireless base station (20) and the wireless terminal (30) by using the control information.

8. The wireless resource control system (1) according to claim 7, wherein the control information includes at least any item of:

> information indicating the communication quality;
> information indicating a comparison result of the communication quality with a required quality that is specified for the type of the communication;
> information indicating the target value of the fifth communication quality;
> information indicating an identifier of the wireless terminal (30) or a bearer;
> information indicating a priority for allocation of the wireless resource;
> information instructing to change a coverage of a wireless cell managed by the wireless base station (20); and
information instructing the wireless terminal (30) to perform switchover of a wireless system.

9. A relay apparatus (40) arranged on a communication path between a content transmission apparatus (10) that is configured to transmit a content via a wireless base station (20) to a wireless terminal (30) and the wireless base station (20), the relay apparatus (40) comprising:

a communication quality evaluation unit (402) that is configured to evaluate a communication quality relating to communication between the content transmission apparatus (10) and the wireless terminal (30);
a control information generation unit (403) that is configured to generate control information for controlling allocation of wireless resource of the wireless base station (20) for the wireless terminal (30), based on the communication quality; and
a communication unit (400) that is configured to notify the control information to the wireless base station (20), wherein the communication quality evaluation unit (402) is configured to evaluate the communication quality by using:

a first communication quality between the relay apparatus (40) and the wireless terminal (30); and
a second communication quality between the content transmission apparatus (10) and the relay apparatus (40).

10. A wireless base station (20) configured to connect via a relay apparatus (40) to a content transmission apparatus (10) and to transmit wirelessly data transmitted from the content transmission apparatus (10) to a wireless terminal (30), the wireless base station (20) comprising
a wireless resource control unit (201) that is configured to receive, from the relay apparatus (40), control information including an evaluation result of a communication quality inclusive of at least any one of
a first communication quality between the relay apparatus (40) and the wireless terminal (30); and
a second communication quality between the content transmission apparatus (10) and the relay apparatus (40), wherein the wireless resource control unit (201) is configured to control allocation of wireless resource for the wireless terminal (30), based on the control information.

11. A wireless resource control method comprising:

evaluating, by a relay apparatus (40), a communication quality relating to communication between a content transmission apparatus (10) and a wireless terminal (30), the relay apparatus (40) being arranged on a communication path between a wireless base station (20) and the content transmission apparatus (10) that transmits a content via the wireless base station (20) to the wireless terminal (30);
generating, by the relay apparatus (40), control information for controlling allocation of wireless resource for the wireless terminal (30), based on the communication quality to notify the control information to the wireless base station (20); and
controlling, by the wireless base station (20), allocation of wireless resource for the wireless terminal (30), based on the control information, wherein the evaluating a communication quality step evaluates the communication quality by using:

a first communication quality between the relay apparatus (40) and the wireless terminal (30); and
a second communication quality between the content transmission apparatus (10) and the relay apparatus (40).

12. A program for causing a computer constituting a relay apparatus (40) arranged on a communication path between a wireless base station (20) and a content transmission apparatus (10) that transmits a content via the wireless base station (20) to a wireless terminal (30) to execute processing comprising:

evaluating a communication quality relating to communication between the content transmission apparatus (10) and the wireless terminal (30); and
generating control information for controlling allocation of wireless resource of the wireless base station (20) for the wireless terminal (30), wherein the evaluating a communication quality processing evaluates the communication quality by using:

a first communication quality between the relay apparatus (40) and the wireless terminal (30); and
a second communication quality between the content transmission apparatus (10) and the relay apparatus (40).

**Patentansprüche**

1. Funkressourcen-Steuersystem (1), das aufweist:

eine Inhaltssendevorrichtung (10);

ein Funkendgerät (30);
eine Funkbasisstation (20), die so konfiguriert ist, dass sie von der Inhaltssendevorrichtung (10) gesendete Daten empfängt und die Daten zum Funkendgerät (30) drahtlos sendet; und eine Relaisvorrichtung (40), die auf einem Kommunikationsweg zwischen der Inhaltssendevorrichtung (10) und der Funkbasisstation (20) angeordnet ist, wobei die Relaisvorrichtung (40) aufweist:

eine Kommunikationsqualität-Bewertungseinheit (402), die so konfiguriert ist, dass sie eine Kommunikationsqualität bezogen auf Kommunikation zwischen der Inhaltssendevorrichtung (10) und dem Funkendgerät (30) bewertet; und
eine Steuerinformations-Erzeugungseinheit (403), die so konfiguriert ist, dass sie Steuerinformationen zum Steuern der Zuordnung von Funkressourcen für das Funkendgerät (30) auf der Grundlage der Kommunikationsqualität erzeugt, wobei die Funkbasisstation (20) aufweist:
eine Funkressourcen-Steuereinheit (201), die so konfiguriert ist, dass sie die Zuordnung von Funkressourcen für das Funkendgerät (30) auf der Grundlage der Steuerinformationen steuert, wobei die Kommunikationsqualität-Bewertungseinheit (402) so konfiguriert ist, dass sie die Kommunikationsqualität bewertet, indem sie verwendet:

eine erste Kommunikationsqualität zwischen der Relaisvorrichtung (40) und dem Funkendgerät (30); und
eine zweite Kommunikationsqualität zwischen der Inhaltssendevorrichtung (10) und der Relaisvorrichtung (40).

2. Funkressourcen-Steuersystem (1) nach Anspruch 1, wobei die Relaisvorrichtung (40) oder die Funkbasisstation (20) ferner aufweist:
eine Kommunikationstyp-Identifikationseinheit (401), die so konfiguriert ist, dass sie einen Typ von Kommunikation identifiziert, die zwischen der Inhaltssendevorrichtung (10) und dem Funkendgerät (30) durchgeführt wird, wobei die Funkressourcen-Steuereinheit (201) so konfiguriert ist, dass sie die Zuordnung von Funkressourcen für das Funkendgerät (30) auf der Grundlage eines Bewertungsergebnisses der Kommunikationsqualität mit Hilfe eines Kriteriums steuert, das dem Typ der Kommunikation entspricht.

3. Funkressourcen-Steuersystem (1) nach Anspruch 2, wobei die Funkressourcen-Steuereinheit (201) so konfiguriert ist, dass sie die Zuordnung von Funkressourcen, die die Funkbasisstation (20) besitzt, gemäß einem Vergleichsergebnis der Kommunikationsqualität mit einer erforderlichen Qualität steuert, die für den Typ der Kommunikation spezifiziert ist.

4. Funkressourcen-Steuersystem (1) nach Anspruch 2, wobei die Funkbasisstation (20) aufweist:
eine Versorgungsbereich-Steuereinheit (202), die so konfiguriert ist, dass sie den Versorgungsbereich einer durch die Funkbasisstation (20) gemanagten Funkzelle gemäß einem Vergleichsergebnis der Kommunikationsqualität mit einer erforderlichen Qualität steuert, die für den Typ der Kommunikation spezifiziert ist.

5. Funkressourcen-Steuersystem (1) nach Anspruch 2, wobei die Funkbasisstation (20) aufweist:
eine Funksystem-Umschaltbefehlseinheit (203), die so konfiguriert ist, dass sie dem Funkendgerät (30) befiehlt, die Umschaltung eines vom Funkendgerät (30) verwendeten Funksystems gemäß einem Vergleichsergebnis der Kommunikationsqualität mit einer erforderlichen Qualität durchzuführen, die für den Typ der Kommunikation spezifiziert ist.

6. Funkressourcen-Steuersystem (1) nach einem der Ansprüche 1 bis 5, wobei die Kommunikationsqualität-Bewertungseinheit (402) so konfiguriert ist, dass sie die Kommunikationsqualität durch Berechnen einer dritten Kommunikationsqualität zwischen der Inhaltssendevorrichtung (10) und dem Funkendgerät (30) mit Hilfe sowohl der ersten Kommunikationsqualität als auch der zweiten Kommunikationsqualität bewertet.

7. Funkressourcen-Steuersystem (1) nach einem der Ansprüche 1 bis 6, wobei die Funkressourcen-Steuereinheit (201) so konfiguriert ist, dass sie einen Sollwert einer vierten Kommunikationsqualität zwischen der Funkbasisstation (20) und dem Funkendgerät (30) mit Hilfe der Steuerinformationen aktualisiert.

8. Funkressourcen-Steuersystem (1) nach Anspruch 7, wobei die Steuerinformationen aufweisen:

Informationen als Angabe der Kommunikationsqualität; und/oder
Informationen als Angabe eines Vergleichsergebnisses der Kommunikationsqualität mit einer erforderlichen Qualität, die für den Typ der Kommunikation spezifiziert ist;
Informationen als Angabe des Sollwerts der fünften Kommunikationsqualität; und/oder
Informationen als Angabe einer Kennung des Funkendgeräts (30) oder eines Inhabers; und/oder
Informationen als Angabe einer Priorität zur Zuordnung der Funkressource; und/oder

Informationen als Befehl, einen Versorgungsbereich einer durch die Funkbasisstation (20) gemanagten Funkzelle zu ändern; und/oder Informationen als Befehl an das Funkendgerät (30), die Umschaltung eines Funksystems durchzuführen.

9. Relaisvorrichtung (40), die auf einem Kommunikationsweg zwischen einer Inhaltssendevorrichtung (10), die so konfiguriert ist, dass sie einen Inhalt über eine Funkbasisstation (20) zu einem Funkendgerät (30) sendet, und der Funkbasisstation (20) angeordnet ist, wobei die Relaisvorrichtung (40) aufweist:

   eine Kommunikationsqualität-Bewertungseinheit (402), die so konfiguriert ist, dass sie eine Kommunikationsqualität bezogen auf Kommunikation zwischen der Inhaltssendevorrichtung (10) und dem Funkendgerät (30) bewertet;
   eine Steuerinformations-Erzeugungseinheit (403), die so konfiguriert ist, dass sie Steuerinformationen zum Steuern der Zuordnung von Funkressourcen der Funkbasisstation (20) für das Funkendgerät (30) auf der Grundlage der Kommunikationsqualität erzeugt; und
   eine Kommunikationseinheit (400), die so konfiguriert ist, dass sie die Steuerinformationen der Funkbasisstation (20) meldet, wobei die Kommunikationsqualität-Bewertungseinheit (402) so konfiguriert ist, dass sie die Kommunikationsqualität bewertet, indem sie verwendet:

      eine erste Kommunikationsqualität zwischen der Relaisvorrichtung (40) und dem Funkendgerät (30); und
      eine zweite Kommunikationsqualität zwischen der Inhaltssendevorrichtung (10) und der Relaisvorrichtung (40).

10. Funkbasisstation (20), die so konfiguriert ist, dass sie sich über eine Relaisvorrichtung (40) mit einer Inhaltssendevorrichtung (10) verbindet und Daten drahtlos sendet, die von der Inhaltssendevorrichtung (10) zu einem Funkendgerät (30) gesendet werden, wobei die Funkbasisstation (20) aufweist:

   eine Funkressourcen-Steuereinheit (201), die so konfiguriert ist, dass sie von der Relaisvorrichtung (40) Steuerinformationen empfängt, darunter ein Bewertungsergebnis einer Kommunikationsqualität mit
   einer ersten Kommunikationsqualität zwischen der Relaisvorrichtung (40) und dem Funkendgerät (30); und/oder
   einer zweiten Kommunikationsqualität zwischen der Inhaltssendevorrichtung (10) und der Relaisvorrichtung (40), wobei die Funkressourcen-Steuereinheit (201) so konfiguriert ist, dass sie die Zuordnung von Funkressourcen für das Funkendgerät (30) auf der Grundlage der Steuerinformationen steuert.

11. Funkressourcen-Steuerverfahren, das aufweist:

   durch eine Relaisvorrichtung (40) erfolgendes bewerten einer Kommunikationsqualität bezogen auf Kommunikation zwischen einer Inhaltssendevorrichtung (10) und einem Funkendgerät (30), wobei die Relaisvorrichtung (40) auf einem Kommunikationsweg zwischen einer Funkbasisstation (20) und der Inhaltssendevorrichtung (10) angeordnet ist, die einen Inhalt über die Funkbasisstation (20) zum Funkendgerät (30) sendet;
   durch die Relaisvorrichtung (40) erfolgendes Erzeugen von Steuerinformationen zum Steuern der Zuordnung von Funkressourcen für das Funkendgerät (30) auf der Grundlage der Kommunikationsqualität, um die Steuerinformationen der Funkbasisstation (20) zu melden; und
   durch die Funkbasisstation (20) erfolgendes Steuern der Zuordnung von Funkressourcen für das Funkendgerät (30) auf der Grundlage der Steuerinformationen, wobei der Schritt des Bewertens einer Kommunikationsqualität die Kommunikationsqualität bewertet, indem er verwendet:

      eine erste Kommunikationsqualität zwischen der Relaisvorrichtung (40) und dem Funkendgerät (30); und
      eine zweite Kommunikationsqualität zwischen der Inhaltssendevorrichtung (10) und der Relaisvorrichtung (40).

12. Programm zum Veranlassen eines Computers, der eine Relaisvorrichtung (40) bildet, die auf einem Kommunikationsweg zwischen einer Funkbasisstation (20) und einer Inhaltssendevorrichtung (10) angeordnet ist, die einen Inhalt über die Funkbasisstation (20) zu einem Funkendgerät (30) sendet, eine Verarbeitung durchzuführen, die aufweist:

   Bewerten einer Kommunikationsqualität bezogen auf Kommunikation zwischen der Inhaltssendevorrichtung (10) und dem Funkendgerät (30); und
   Erzeugen von Steuerinformationen zum Steuern der Zuordnung von Funkressourcen der Funkbasisstation (20) für das Funkendgerät (30), wobei die Verarbeitung zum Bewerten einer Kommunikationsqualität die Kommunikationsqualität bewertet, indem sie verwendet:

      eine erste Kommunikationsqualität zwischen der Relaisvorrichtung (40) und dem Funkendgerät (30); und

eine zweite Kommunikationsqualität zwischen der Inhaltssendevorrichtung (10) und der Relaisvorrichtung (40).

## Revendications

1. Système de commande de ressources sans fil (1) comprenant :

un appareil de transmission de contenu (10) ;
un terminal sans fil (30) ;
une station de base sans fil (20) qui est configurée de manière à recevoir des données transmises à partir de l'appareil de transmission de contenu (10), et à transmettre les données par voie hertzienne au terminal sans fil (30) ; et
un appareil relais (40) agencé sur un trajet de communication entre l'appareil de transmission de contenu (10) et la station de base sans fil (20), dans lequel
l'appareil relais (40) comprend :

une unité d'évaluation de qualité de communication (402) qui est configurée de manière à évaluer une qualité de communication relative à la communication entre l'appareil de transmission de contenu (10) et le terminal sans fil (30) ; et
une unité de génération d'informations de commande (403) qui est configurée de manière à générer des informations de commande en vue de commander une allocation de ressources sans fil pour le terminal sans fil (30), sur la base de la qualité de communication, dans lequel

la station de base sans fil (20) comprend :
une unité de commande de ressources sans fil (201) qui est configurée de manière à commander une allocation de ressources sans fil pour le terminal sans fil (30), sur la base des informations de commande, dans lequel l'unité d'évaluation de qualité de communication (402) est configurée de manière à évaluer la qualité de communication en utilisant :

une première qualité de communication entre l'appareil relais (40) et le terminal sans fil (30) ; et
une deuxième qualité de communication entre l'appareil de transmission de contenu (10) et l'appareil relais (40).

2. Système de commande de ressources sans fil (1) selon la revendication 1, dans lequel l'appareil relais (40) ou la station de base sans fil (20) comprend en outre :

une unité d'identification de type de communication (401) qui est configurée de manière à identifier un type de communication exécuté entre l'appareil de transmission de contenu (10) et le terminal sans fil (30), dans lequel
l'unité de commande de ressources sans fil (201) est configurée de manière à commander l'allocation de ressources sans fil pour le terminal sans fil (30), sur la base d'un résultat d'évaluation de la qualité de communication, en utilisant un critère correspondant au type de la communication.

3. Système de commande de ressources sans fil (1) selon la revendication 2, dans lequel l'unité de commande de ressources sans fil (201) est configurée de manière à commander l'allocation de ressources sans fil détenues par la station de base sans fil (20), selon un résultat de comparaison de la qualité de communication à une qualité requise qui est spécifiée pour le type de la communication.

4. Système de commande de ressources sans fil (1) selon la revendication 2, dans lequel la station de base sans fil (20) comprend :
une unité de commande de couverture (202) qui est configurée de manière à commander une couverture d'une cellule sans fil gérée par la station de base sans fil (20), selon un résultat de comparaison de la qualité de communication à une qualité requise qui est spécifiée pour le type de la communication.

5. Système de commande de ressources sans fil (1) selon la revendication 2, dans lequel la station de base sans fil (20) comprend :
une unité d'instruction de commutation de système sans fil (203) qui est configurée de manière à donner instruction, au terminal sans fil (30), de mettre en oeuvre une permutation d'un système sans fil utilisé par le terminal sans fil (30), selon un résultat de comparaison de la qualité de communication à une qualité requise qui est spécifiée pour le type de la communication.

6. Système de commande de ressources sans fil (1) selon l'une quelconque des revendications 1 à 5, dans lequel l'unité d'évaluation de qualité de communication (402) est configurée de manière à évaluer la qualité de communication en calculant une troisième qualité de communication entre l'appareil de transmission de contenu (10) et le terminal sans fil (30) en utilisant à la fois la première qualité de communication et la deuxième qualité de communication.

7. Système de commande de ressources sans fil (1) selon l'une quelconque des revendications 1 à 6, dans lequel l'unité de commande de ressources sans fil (201) est configurée de manière à mettre à jour une valeur cible d'une quatrième qualité de communication entre la station de base sans fil (20) et le terminal sans fil (30) en utilisant les informations de commande.

**8.** Système de commande de ressources sans fil (1) selon la revendication 7, dans lequel les informations de commande incluent au moins un quelconque élément parmi :

des informations indiquant la qualité de communication ;
des informations indiquant un résultat de comparaison de la qualité de communication à une qualité requise qui est spécifiée pour le type de la communication ;
des informations indiquant la valeur cible de la cinquième qualité de communication ;
des informations indiquant un identificateur du terminal sans fil (30) ou une porteuse ;
des informations indiquant une priorité pour une allocation des ressources sans fil ;
des informations donnant instruction de modifier une couverture d'une cellule sans fil gérée par la station de base sans fil (20) ; et
des informations donnant instruction, au terminal sans fil (30), de mettre en oeuvre une permutation d'un système sans fil.

**9.** Appareil relais (40) agencé sur un trajet de communication entre un appareil de transmission de contenu (10), qui est configuré de manière à transmettre un contenu par l'intermédiaire d'une station de base sans fil (20) à un terminal sans fil (30), et la station de base sans fil (20), l'appareil relais (40) comprenant :

une unité d'évaluation de qualité de communication (402) qui est configurée de manière à évaluer une qualité de communication relative à une communication entre l'appareil de transmission de contenu (10) et le terminal sans fil (30) ;
une unité de génération d'informations de commande (403) qui est configurée de manière à générer des informations de commande destinées à commander une allocation de ressources sans fil de la station de base sans fil (20) pour le terminal sans fil (30), sur la base de la qualité de communication ; et
une unité de communication (400) qui est configurée de manière à notifier les informations de commande à la station de base sans fil (20), dans lequel l'unité d'évaluation de qualité de communication (402) est configurée de manière à évaluer la qualité de communication en utilisant :

une première qualité de communication entre l'appareil relais (40) et le terminal sans fil (30) ; et
une deuxième qualité de communication entre l'appareil de transmission de contenu (10) et l'appareil relais (40).

**10.** Station de base sans fil (20) configurée de manière à se connecter, par l'intermédiaire d'un appareil relais (40), à un appareil de transmission de contenu (10), et à transmettre, par voie hertzienne, des données transmises à partir de l'appareil de transmission de contenu (10) à un terminal sans fil (30), la station de base sans fil (20) comprenant :
une unité de commande de ressources sans fil (201) qui est configurée de manière à recevoir, en provenance de l'appareil relais (40), des informations de commande incluant un résultat d'évaluation d'une qualité de communication incluant au moins l'une quelconque parmi :

une première qualité de communication entre l'appareil relais (40) et le terminal sans fil (30) ; et
une deuxième qualité de communication entre l'appareil de transmission de contenu (10) et l'appareil relais (40), dans lequel l'unité de commande de ressources sans fil (201) est configurée de manière à commander une allocation de ressources sans fil pour le terminal sans fil (30), sur la base des informations de commande.

**11.** Procédé de commande de ressources sans fil comprenant les étapes ci-dessous consistant à :

évaluer, par le biais d'un appareil relais (40), une qualité de communication relative à une communication entre un appareil de transmission de contenu (10) et un terminal sans fil (30), l'appareil relais (40) étant agencé sur un trajet de communication entre une station de base sans fil (20) et l'appareil de transmission de contenu (10) qui transmet un contenu par l'intermédiaire de la station de base sans fil (20) au terminal sans fil (30) ;
générer, par le biais de l'appareil relais (40), des informations de commande pour commander une allocation de ressources sans fil pour le terminal sans fil (30), sur la base de la qualité de communication pour notifier les informations de commande à la station de base sans fil (20) ; et
commander, par le biais de la station de base sans fil (20), une allocation de ressources sans fil pour le terminal sans fil (30), sur la base des informations de commande, dans lequel l'étape d'évaluation d'une qualité de communication évalue la qualité de communication en utilisant :

une première qualité de communication entre l'appareil relais (40) et le terminal sans fil (30) ; et
une deuxième qualité de communication entre l'appareil de transmission de contenu (10) et l'appareil relais (40).

12. Programme destiné à amener un ordinateur, constituant un appareil relais (40) agencé sur un trajet de communication entre une station de base sans fil (20) et un appareil de transmission de contenu (10) qui transmet un contenu par l'intermédiaire de la station de base sans fil (20) à un terminal sans fil (30), à exécuter un traitement comprenant les étapes ci-dessous consistant à :

évaluer une qualité de communication relative à une communication entre l'appareil de transmission de contenu (10) et le terminal sans fil (30) ; et
générer des informations de commande pour commander une allocation de ressources sans fil de la station de base sans fil (20) pour le terminal sans fil (30), dans lequel le traitement d'évaluation d'une qualité de communication évalue la qualité de communication en utilisant :

une première qualité de communication entre l'appareil relais (40) et le terminal sans fil (30) ; et
une deuxième qualité de communication entre l'appareil de transmission de contenu (10) et l'appareil relais (40).

# FIG. 1

| QCI | Resource Type | Priority | Packet Delay Budget | Packet Error Loss Rate | Example Services |
|---|---|---|---|---|---|
| 1 | GBR | 2 | 100 ms | $10^{-2}$ | Conversational Voice |
| 2 | | 4 | 150 ms | $10^{-3}$ | Conversational Video (Live Streaming) |
| 3 | | 3 | 50 ms | $10^{-3}$ | Real Time Gaming |
| 4 | | 5 | 300 ms | $10^{-6}$ | Non-Conversational Video (Buffered Streaming) |
| 5 | Non-GBR | 1 | 100 ms | $10^{-6}$ | IMS Signalling |
| 6 | | 6 | 300 ms | $10^{-6}$ | Video (Buffered Streaming) TCP-based (e.g., www, e-mail, chat, ftp, p2p file sharing, progressive video, etc.) |
| 7 | | 7 | 100 ms | $10^{-3}$ | Voice, Video (Live Streaming) Interactive Gaming |
| 8 | | 8 | 300 ms | $10^{-6}$ | Video (Buffered Streaming) TCP-based (e.g., www, e-mail, chat, ftp, p2p file sharing, progressive video, etc.) |
| 9 | | 9 | | | |

FIG. 2 <u>1</u>

MOBILE
ACCESS
NETWORK

MOBILE CORE
NETWORK
/EXTERNAL NETWORK

| WIRELESS TERMINAL | WIRELESS BASE STATION | RELAY APPARATUS | CONTENT TRANSMISSION APPARATUS |
|---|---|---|---|
| 30 | 20 | 40 | 10 |

FIG. 3

1

FIG. 4

20 : WIRELESS BASE STATION          40: RELAY APPARATUS

200

COMMUNICATION
UNIT

201

WIRELESS
RESOURCE
CONTROL UNIT

400

COMMUNICATION
UNIT

401

COMMUNICATION
TYPE
IDENTIFICATION
UNIT

402

COMMUNICATION
QUALITY
EVALUATION UNIT

403

CONTROL
INFORMATION
GENERATION UNIT

# FIG. 5

```
┌──────────────────────────────────┐
│   A WIRELESS RESOURCE CONTROL     │
│          PROCESSING               │
│            START                  │
└──────────────────────────────────┘
                 │
                 │                    S100
                 ▼
┌──────────────────────────────────────┐
│ IDENTIFYING TYPE OF COMMUNICATION      │
│ BETWEEN CONTENT TRANSMISSION           │
│ APPARATUS AND WIRELESS TERMINAL        │
└──────────────────────────────────────┘
                 │
                 │                    S101
                 ▼
┌──────────────────────────────────────┐
│ IN RELAY APPARATUS, EVALUATING         │
│ COMMUNICATION QUALITY RELATING TO      │
│ COMMUNICATION BETWEEN CONTENT          │
│ TRANSMISSION APPARATUS AND             │
│ WIRELESS TERMINAL                      │
└──────────────────────────────────────┘
                 │
                 │                    S102
                 ▼
┌──────────────────────────────────────┐
│ NOTIFYING CONTROL INFORMATION FOR      │
│ CONTROLING ALLOCATION OF WIRELESS      │
│ RESOURCE FROM RELAY APPARATUS TO       │
│ WIRELESS BASE STATION                  │
└──────────────────────────────────────┘
                 │
                 │                    S103
                 ▼
┌──────────────────────────────────────┐
│ IN WIRELESS BASE STATION, CONTROLING   │
│ ALLOCATION OF WIRELESS RESOURCE FOR    │
│ WIRELESS TERMINAL BY USING NOTIFIED    │
│ CONTROL INFORMATION                    │
└──────────────────────────────────────┘
                 │
                 ▼
┌──────────────────────────────────┐
│              END                  │
└──────────────────────────────────┘
```

# FIG. 6

**20 : WIRELESS BASE STATION**

**40 : RELAY APPARATUS**

200

```
COMMUNICATION
UNIT
```

201

```
WIRELESS
RESOURCE
CONTROL UNIT
```

202

```
COVERAGE
CONTROL UNIT
```

400

```
COMMUNICATION
UNIT
```

401

```
COMMUNICATION
TYPE
IDENTIFICATION
UNIT
```

402

```
COMMUNICATION
QUALITY
EVALUATION UNIT
```

403

```
CONTROL
INFORMATION
GENERATION UNIT
```

## FIG. 7

```
┌──────────────────────────────────┐
│   A WIRELESS RESOURCE CONTROL     │
│          PROCESSING              │
│            START                 │
└──────────────────────────────────┘
                │  S100
                ▼
┌──────────────────────────────────┐
│ IDENTIFYING TYPE OF COMMUNICATION │
│ BETWEEN CONTENT TRANSMISSION      │
│ APPARATUS AND WIRELESS TERMINAL   │
└──────────────────────────────────┘
                │  S101
                ▼
┌──────────────────────────────────┐
│ IN RELAY APPARATUS, EVALUATING    │
│ COMMUNICATION QUALITY RELATING TO │
│ COMMUNICATION BETWEEN CONTENT     │
│ TRANSMISSION APPARATUS AND        │
│ WIRELESS TERMINAL                 │
└──────────────────────────────────┘
                │  S102
                ▼
┌──────────────────────────────────┐
│ NOTIFYING CONTROL INFORMATION FOR │
│ CONTROLLING ALLOCATION OF         │
│ WIRELESS RESOURCE FROM RELAY      │
│ APPARATUS TO WIRELESS BASE        │
│ STATION                          │
└──────────────────────────────────┘
                │        S200
                ▼
        ◇ DOES CONTROL ◇ ── NO ──┐
        ◇ INFORMATION  ◇          │
        ◇ MEET PRESET  ◇          │
        ◇ CONDITION?   ◇          │
                │                 │
               YES  S103          │   S201
                ▼                 ▼
┌────────────────────────┐  ┌────────────────────────┐
│ IN WIRELESS BASE       │  │ IN WIRELESS BASE       │
│ STATION, CONTROLING    │  │ STATION, CONTROLING    │
│ ALLOCATION OF WIRELESS │  │ COVERAGE OF WIRELESS   │
│ RESOURCE FOR WIRELESS  │  │ CELL                   │
│ TERMINAL BY USING      │  │                        │
│ NOTIFIED CONTROL       │  │                        │
│ INFORMATION            │  │                        │
└────────────────────────┘  └────────────────────────┘
                │                 │
                ▼─────────────────┘
        ┌────────────────┐
        │      END       │
        └────────────────┘
```

FIG. 8

20: WIRELESS BASE STATION      40: RELAY APPARATUS

200

COMMUNICATION
UNIT

201

WIRELESS
RESOURCE
CONTROL UNIT

203

WIRELESS
SYSTEM
SWITCHING
INSTRUCTION
UNIT

400

COMMUNICATION
UNIT

401

COMMUNICATION
TYPE
IDENTIFICATION
UNIT

402

COMMUNICATION
QUALITY
EVALUATION UNIT

403

CONTROL
INFORMATION
GENERATION UNIT

## FIG. 9

```
┌──────────────────────────────────────┐
│      A WIRELESS RESOURCE CONTROL      │
│             PROCESSING                │
│               START                   │
└──────────────────────────────────────┘
                   │
                   │              S100
                   ▼
┌──────────────────────────────────────┐
│ IDENTIFYING TYPE OF COMMUNICATION BETWEEN CONTENT │
│   TRANSMISSION APPARATUS AND WIRELESS TERMINAL    │
└──────────────────────────────────────┘
                   │              S101
                   ▼
┌──────────────────────────────────────┐
│ RELAY APPARATUS EVALUATING COMMUNICATION QUALITY │
│   RELATING TO COMMUNICATION BETWEEN CONTENT      │
│ TRANSMISSION APPARATUS AND WIRELESS TERMINAL     │
└──────────────────────────────────────┘
                   │              S102
                   ▼
┌──────────────────────────────────────┐
│ NOTIFYING CONTROL INFORMATION FOR CONTROLLING    │
│ ALLOCATION OF WIRELESS RESOURCE FROM RELAY APPARATUS TO │
│            WIRELESS BASE STATION                 │
└──────────────────────────────────────┘
```

**S200**

DOES CONTROL INFORMATION MEET PRESET CONDITION? — **NO**

**YES** — **S103**

IN WIRELESS BASE STATION, CONTROLINGING ALLOCATION OF WIRELESS RESOURCE FOR WIRELESS TERMINAL BY USING NOTIFIED CONTROL INFORMATION

**S300**

INSTRUCTING WIRELESS TERMINAL TO PERFORM SWITCHOVER OF WIRELESS SYSTEM

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2014247975 A
- JP 4335619 B
- JP 2012005059 A
- JP 2011097286 A
- WO 2013123467 A

### Non-patent literature cited in the description

- 3GPP(Third Generation Partnership Project) TS23.203 v11.13.0. Policy and charging control architecture, March 2014, 38
- SOLUTION GUIDE DEPLOYING ARUBA WIRELESS CONTROLLERS WITH MICROSOFT LYNC SDN API. Aruba NETWROKS Inc, 25 September 2014, 4-5
- 8.1 Architecture and protocol enhancements for Dual connectivity. *3GPP TR 36.842 V12.0.0,* December 2013